# EUROPEAN PATENT SPECIFICATION

(11) **EP 4 087 413 B1**
(45) Date of publication and mention of the grant of the patent: **23.09.2026**
(21) Application number: 21701228.5
(22) Date of filing: 08.01.2021
(51) Int. Cl.: A23L 27/30, A23L 29/30, A23L 33/21, C08B 37/00

(54) **OLIGOSACCHARIDE COMPOSITIONS AND METHODS OF MAKING THEM**
OLIGOSACCHARIDZUSAMMENSETZUNGEN UND VERFAHREN ZU IHRER HERSTELLUNG
COMPOSITIONS D'OLIGOSACCHARIDES ET LEURS PROCÉDÉS DE PRODUCTION

(30) Priority: 10.01.2020 US 202062959810 P
(43) Date of publication of application: 16.11.2022
(60) Divisional application: 26179606.4
(73) Proprietor: Pfeifer & Langen UK Limited, Cambridge CB4 0WA (GB)
(72) Inventor: SIMMONS, Thomas J, Cambridge CB1 3UG (GB); BARTOSIAK-JENTYS, Jeremy, Chester, CH1 2QS (GB)
(74) Representative: Kutzenberger Wolff & Partner
(86) International application number: PCT/EP2021/050311
(87) International publication number: WO 2021/140225

(56) References cited:
- JP-A- 2008 120 789
- KR-A- 20190 133 438
- US-A1- 2009 062 232
- US-A1- 2016 082 022

## Description

### BACKGROUND

Sugary foods and drinks are generally a common part of cultural and lifestyle habits across the world, but the sugar they contain has been linked to obesity, diabetes, poor dental health, and disruptive behavior in people. Because of this, consumer preferences have been shifting away from sugar-containing foods, and governments are increasingly implementing regulations to encourage the consumption of less sugar.

As such, industry has been searching for appropriate low-calorie sweeteners for many decades to substitute for sugar in food and beverages. Unfortunately, many sugar substitutes are produced from non-natural resources, and often include bitter undertones or other unpleasant tastes along with their sweetness, both of which consumers can find unappealing. Moreover, while many sweeteners are able to mimic the sweetness of sugar in food and drinks, few are able to mimic the broad range of roles that sugar plays in food, such as adding bulk, modulating texture, providing structure, acting as a preservative, and modulating color and flavor through caramelization and Maillard reactions. In addition, many bulking sweeteners that are able to mimic these physical properties of sugar have gastrointestinal tolerance issues that limit their use well below the amount required to replace sugar in a standard Western diet.

Dietary fiber is an important part of a positive diet and helps maintain digestive health and a well-regulated gut flora. Such fiber comprises saccharides of varying chain lengths and types. In addition to being found naturally in a wide spectrum of foods, fiber can also be produced separately and added to other foods during their manufacture.

JP2008120789A describes an inhibitor or a bacteriostatic agent of Helicobacter Pylori which contains water-soluble saccharide which is a polysaccharide, in which a plurality of saccharides are chemically bonded, having at least one β bond in the structure, and where the polysaccharide contains at least one glucose and/or xylose as a constituent saccharide and the β1-4 bond is preferably a β1-4 glucoside bond and/or a β 1-4 xyloside bond. KR20190133438A describes a sweetness composition with high color stability while having low fructose content and a manufacturing method thereof. US2009062232A1 describes a high-pure xylooligosaccharide composition containing reduced UV-absorbing substances and reduced coloring matters.

### SUMMARY

The invention provides a sweetener composition comprising: an oligosaccharide component comprising xylo-oligosaccharides with a degree of polymerization (DP) of two to twelve and cello-oligosaccharides with a DP of two to six, wherein the xylo-oligosaccharides and the cello-oligosaccharides are present at a xylo-oligosaccharide to cello-oligosaccharide w/w ratio of 19: 1 to 1:1; and a high-intensity sweetener, wherein the oligosaccharide component and the high-intensity sweetener are present at an oligosaccharide component to high-intensity sweetener w/w ratio of 5000: 1 to 50:1.

In an embodiment, the high-intensity sweetener comprises a natural high-intensity sweetener, an artificial high-intensity sweetener, or a combination thereof.

In a further embodiment, the high-intensity sweetener comprises acesulfame potassium (Ace-K), advantame, aspartame, neotame, saccharin, a Siraitia grosvenorii Swingle (Luo Han Guo) fruit extract (SGFE), a steviol glycoside, sucralose, a clyclamate, glycyrrhizin, neohesperidin dihydrochalcone, thaumatin, or any combination thereof.

In an embodiment, the cello-oligosaccharides and the xylo-oligosaccharides are present at a xylo-oligosaccharide to cello-oligosaccharide w/w ratio of 10:1 to 1:1 in the sweetener composition. In some embodiments, a ratio of the oligosaccharide component to the high-intensity sweetener may be from 500:1 to 50:1 by dry weight.

In some embodiments, the average sweetness level per unit weight of the high-intensity sweetener may be greater than an average sweetness level of the oligosaccharide component.

In an embodiment, an average sweetness level per unit weight of the high-intensity sweetener is at least 5 times, and in further embodiments at least 10 times, 20 times, 50 times, 70 times, 90 times, 100 times, 150 times, or 200 times greater than an average sweetness level of the oligosaccharide component.

In some embodiments, a relative sweetness level of the high-intensity sweetener versus sucrose may be from 20:1 to 20,000:1. In some embodiments, the relative sweetness level of the high-intensity sweetener versus sucrose may be from 30:1 to 600:1. In some embodiments, the average sweetness may be a sweetness perception by a human subject. In some embodiments, the weight ratio of the second component to the composition may be from 1:2,000 to 1:50. In some embodiments, the weight ratio of the second component to composition may be from 1:1000 to 1:100.

In some embodiments, the oligosaccharide component decreases an average bitterness level per unit weight of the composition as compared to a control composition comprising the high-intensity sweetener without the oligosaccharide component.

In some embodiments, the oligosaccharide component decreases an average bitter aftertaste per unit weight of the composition as compared to a control composition comprising the high-intensity sweetener without the oligosaccharide component.

In some embodiments, the average bitterness may be bitterness perception by a human subject.

In some embodiments, the average bitter aftertaste may be bitter aftertaste perception by a human subject.

In an embodiment, the sweetener composition comprises less than 40% by dry weight monosaccharides. In further embodiments, the composition may comprise less than 35%, 30%, 25%, 20%, 10%, 5%, or 1% by dry weight monosaccharides. In some embodiments, the composition may be substantially free of monosaccharides. In some embodiments, the monosaccharides comprise glucose, fructose, galactose, or any combination thereof.

In some embodiments, the composition may comprise less than 70%, 60%, 55%, 50%, 45%, 40%, 30%, 25%, 20%, 10%, 5%, or 1% by dry weight sucrose, lactose, maltose, or any combination thereof. In some embodiments, the composition may be substantially free of sucrose, lactose, maltose, or any combination thereof.

In an embodiment, the amount of sucrose, lactose, maltose, fructose, sugar alcohol (polyol), allulose, tagatose, maltodextrin, resistant maltodextrin, erythritol, inulin or any combination thereof is less than the amount of the xylo-oligosaccharides or the amount of the cello-oligosaccharides.

In a further embodiment, the amount of sucrose, lactose, maltose, or any combination thereof may be less than the amount of cellobiose, or less than the amount of xylobiose.

In an embodiment, the composition comprises less than 20% by dry weight maltodextrin. In further embodiments, the composition may comprise less than 10%, 5%, or 1% by dry weight maltodextrin. In some embodiments, the composition may be substantially free of maltodextrin.

In an embodiment, the xylo-oligosaccharides comprise xylo-oligosaccharides with one or more side branches, xylo-oligosaccharides with one or more glucuronosyl side branches, xylo-oligosaccharides with one or more methylglucurosyl side branches, xylo-oligosaccharides with one or more arabinosyl side branches, or any combination thereof. In some embodiments, the xylo-oligosaccharides comprise at least 40%, at least 50%, at least 60%, at least 70%, at least 80%, or at least 90% xylobiose. In an embodiment, the xylo-oligosaccharides comprise xylose and arabinose monomers collectively at a xylose monomer to arabinose monomer ratio of 20:1 to 2:1, 18:1 to 4:1, or 16:1 to 6:1.

In some embodiments, the cello-oligosaccharides comprise at least 40%, at least 50%, at least 60%, at least 70%, at least 80%, or at least 90% cellobiose. In an embodiment, the sweetener composition may further comprise a compound selected from a polysaccharide, a cellulosic polysaccharide, cellulose, a hemicellulosic polysaccharide, xylan, a polysaccharide derivative, a cellulose derivative, carboxymethylcellulose, a polysaccharide aggregate, a lignocellulosic material, or any combination thereof. In an embodiment, the sweetener composition comprises at most 30% of the polysaccharides by dry weight.

In an embodiment, the sweetener composition further comprises a compound selected from a phenolic compound, a lignin, a portion of a lignin, a product of lignin breakdown, ferulic acid, a ferulic acid derivative, or any combination thereof.

In an embodiment, the oligosaccharide component comprises less than 0.5 ppm Al, As, B, Ba, Be, Ca, Cd, Co, Cr, Cu, Fe, Hg, K, Li, Mg, Mn, Mo, Na, Ni, P, Pb, S, Sb, Se, Si, Sn, Sr, Ti, Tl, V, and/or Zn. In further embodiments, the oligosaccharide component may comprise less than 0.1 ppm or 0.05 ppm of said elements. In some embodiments, the oligosaccharide component may comprise more than 0.01 ppm Al, As, B, Ba, Be, Ca, Cd, Co, Cr, Cu, Fe, Hg, K, Li, Mg, Mn, Mo, Na, Ni, P, Pb, S, Sb, Se, Si, Sn, Sr, Ti, Tl, V, and/or Zn.

In some embodiments, the sweetener composition consists essentially of: the oligosaccharide component consisting essentially of the xylo-oligosaccharides with a degree of polymerization (DP) from two to twelve and the cello-oligosaccharides with a DP from two to six, wherein the oligosaccharide component may be at least 70% by dry weight of the sweetener composition; and the high-intensity sweetener, wherein the high-intensity sweetener may be from 0.02% to 2% by dry weight of the sweetener composition.

In some embodiments, the sweetener composition consists of: the xylo-oligosaccharides with a degree of polymerization (DP) of from two to twelve; the cello-oligosaccharides with a DP from two to six; and the high-intensity sweetener.

In some embodiments, the oligosaccharide component may comprise greater than 1% wt/wt cellobiose. In some embodiments, the oligosaccharide component may comprise less than 50% wt/wt cellobiose. In some embodiments, the oligosaccharide component may comprise less than 35% wt/wt cellulose. In some embodiments, the oligosaccharide component and the high-intensity sweetener constitute from 10% to 75% wt/wt of the sweetener composition.

In some embodiments, the composition comprises less than 20% wt/wt glucose, fructose, and galactose. In some embodiments, the composition comprises less than 20% wt/wt monosaccharides. In some embodiments, the composition comprises less than 20% wt/wt sucrose, maltose, and lactose.

In further embodiments, the high-intensity sweetener may comprise saccharin, sucralose, a steviol glycoside, a mogroside, aspartame, or any combination thereof.

In some embodiments, the xylo-oligosaccharides are thermochemically modified. In some embodiments, the xylo-oligosaccharides are thermochemically modified by caramelization or a Maillard reaction. In some embodiments, the cello-oligosaccharides are thermochemically modified. In some embodiments, the cello-oligosaccharides are thermochemically modified by caramelization or a Maillard reaction.

In an embodiment, an average sweetness level per unit weight of the high-intensity sweetener is at least 5 times greater than an average sweetness level of the oligosaccharide component. In further embodiments, the average sweetness level per unit weight of the high-intensity sweetener may be at least 10 times, 20 times, 50 times, 70 times, 90 times, 100 times, 150 times, or 200 times greater than an average sweetness level of the oligosaccharide component.

In some embodiments, the oligosaccharide component decreases an average bitterness level per unit weight of the composition as compared to a control composition comprising only the high-intensity sweetener. In some embodiments, the oligosaccharide component decreases an average bitter aftertaste per unit weight of the composition as compared to a control composition comprising only the high-intensity sweetener. In some embodiments, the average bitterness may be a bitterness perception by a human subject and wherein the average bitter aftertaste may be a bitter aftertaste perception by a human subject.

In an embodiment, the composition comprises less than 40% by dry weight monosaccharides. In further embodiments, the composition may comprise less than 35%, 30%, 25%, 20%, 10%, 5%, or 1% by dry weight monosaccharides. In some embodiments, the composition may be substantially free of monosaccharides. In some embodiments, the monosaccharides comprise glucose, fructose, galactose, or any combination thereof.

In some embodiments, the composition may comprise less than 70%, 60%, 55%, 50%, 45%, 40%, 30%, 25%, 20%, 10%, 5%, or 1% by dry weight disaccharides. In some embodiments, the disaccharides comprise sucrose, lactose, maltose, or any combination thereof. In some embodiments, the composition may be substantially free of sucrose, lactose, maltose, or any combination thereof.

In an embodiment, the amount of sucrose, lactose, maltose, fructose, sugar alcohol (polyol), allulose, tagatose, maltodextrin, resistant maltodextrin, erythritol, inulin or any combination thereof, may be less than the amount of the xylo-oligosaccharides or the amount of the cello-oligosaccharides.

In some embodiments, the amount of sucrose, lactose, maltose, or any combination thereof, may be less than the amount of cellobiose.

In an embodiment, the amount of sucrose, lactose, maltose, fructose, sugar alcohol (polyol), allulose, tagatose, maltodextrin, resistant maltodextrin, erythritol, inulin or any combination thereof is less than the amount of the xylo-oligosaccharides or the amount of the cello-oligosaccharides.

In some embodiments, the amount of sucrose, lactose, maltose, or any combination thereof, may be less than the amount of xylobiose.

In some embodiments, the amount of sucrose, lactose, maltose, or any combination thereof, may be less than the amount of the manno-oligosaccharides.

In some embodiments, the amount of sucrose, lactose, maltose, or any combination thereof, may be less than the amount of mannan-derived disaccharide.

In an embodiment, the composition comprises less than 20% by dry weight maltodextrin. In further embodiments, the composition may comprise less than 10%, 5%, or 1% by dry weight maltodextrin.

In some embodiments, the composition may be substantially free of maltodextrin.

In some embodiments, the composition may comprise at least 10%, 20%, 30%, 40%, 50%, or 60% by dry weight of the at least two types of oligosaccharides.

In some embodiments, the cello-oligosaccharides comprise at least 5%, 10%, 15%, 20%, 25%, 30%, or 35% by dry weight of the oligosaccharide component.

In some embodiments, the cello-oligosaccharides comprise at least 40%, at least 50%, at least 60%, at least 70%, at least 80%, or at least 90% cellobiose.

In some embodiments, the xylo-oligosaccharides comprise xylo-oligosaccharides with one or more side branches, xylo-oligosaccharides with one or more glucuronosyl side branches, xylo-oligosaccharides with one or more methylglucurosyl side branches, xylo-oligosaccharides with one or more arabinosyl side branches, or combinations thereof.

In some embodiments, the xylo-oligosaccharides comprise at least 5%, 10%, 15%, 20%, 25%, 30%, or 35% by dry weight of the oligosaccharide component.

In some embodiments, the xylo-oligosaccharides comprise at least 40%, at least 50%, at least 60%, at least 70%, at least 80%, or at least 90% xylobiose.

In some embodiments, the xylo-oligosaccharides comprise xylose and arabinose monomers collectively at a ratio of between 20:1 and 2:1, 18:1 and 4:1, 16:1 and 6:1.

In some embodiments, the manno-oligosaccharides comprise at least 5%, 10%, 15%, 20%, 25%, 30%, or 35% by dry weight of the oligosaccharide component.

In some embodiments, the cello-oligosaccharides comprise at least 40%, at least 50%, at least 60%, at least 70%, at least 80%, or at least 90% disaccharide.

In some embodiments, the mixed-linkage glucan oligosaccharides comprise at least 5%, 10%, 15%, 20%, 25%, 30%, or 35% by dry weight of the oligosaccharide component.

In some embodiments, the xyloglucan oligosaccharides comprise at least 5%, 10%, 15%, 20%, 25%, 30%, or 35% by dry weight of the oligosaccharide component.

In some embodiments, the weight/weight ratio of the oligosaccharide component to the high-intensity sweetener may be from 3000: 1 to 2000:1, 2000:1 to 1000:1, 1000:1 to 500:1, 500:1 to 250:1, 250:1 to 125:1, 125:1 to 100:1, or 100:1 to 75:1.

In some embodiments, the weight/weight ratio of the cello-oligosaccharides to the high-intensity sweetener may be from 1000:1 to 666:1, 666:1 to 333:1, 333:1 to 166:1, or 166:1 to 83:1.

In some embodiments, the composition comprises cellobiose, wherein the weight/weight ratio of the cellobiose to the high-intensity sweetener may be from 1000:1 to 666:1, 666:1 to 333:1, 333:1 to 166:1, or 166:1 to 83:1.

In some embodiments, the weight/weight ratio of the xylo-oligosaccharides to the high-intensity sweetener may be from 1000:1 to 666:1, 6661 to 333:1, 333:1 to 166:1, or 166:1 to 83:1.

In some embodiments, the composition comprises xylobiose, wherein the weight/weight ratio of the xylobiose to the high-intensity sweetener may be from 1000:1 to 666:1, 666:1 to 333:1, 333:1 to 166:1, or 166:1 to 83:1.

In some embodiments, the composition comprises arabinosylated xylo-oligosaccharides, wherein the weight/weight ratio of the arabinosylated xylo-oligosaccharides to the high-intensity sweetener may be from 1000:1 to 666:1, 666:1 to 333:1, 333:1 to 166:1, or 166:1 to 83:1.

In some embodiments, the weight/weight ratio of the manno-oligosaccharides to the high-intensity sweetener may be from 1000:1 to 666:1, 666:1 to 333:1, 333:1 to 166:1, or 166:1 to 83:1.

In some embodiments, the composition comprises mannan-derived disaccharides, wherein the weight/weight ratio of the mannan-derived disaccharides to the high-intensity sweetener

may be from 1000:1 to 666:1, 666:1 to 333:1, 333:1 to 166:1, or 166:1 to 83:1.

In some embodiments, the composition comprises saccharides not digestible by human enzymes in vitro, wherein the weight/weight ratio of the saccharides not digestible by human enzymes in vitro to the high-intensity sweetener may be from 3000: 1 to 2000:1, 2000:1 to 1000:1, 1000:1 to 500:1, 500:1 to 250:1, 250:1 to 125:1, 125:1 to 100:1, or 100:1 to 75:1.

In some embodiments, the weight/weight ratio of the oligosaccharide component to the high-intensity sweetener may be from 3000: 1 to 2000:1, 2000:1 to 1000:1, 1000:1 to 500:1, 500:1 to 250:1, 250:1 to 125:1, 125:1 to 100:1, or 100:1 to 75:1.

In some embodiments, the weight/weight ratio of the cello-oligosaccharides to the high-intensity sweetener may be from 1000:1 to 666:1, 666:1 to 333:1, 333:1 to 166:1, or 166:1 to 83:1.

In some embodiments, the composition comprises cellobiose, wherein the weight/weight ratio of the cellobiose to the high-intensity sweetener may be from 1000:1 to 666:1, 666:1 to 333:1, 333:1 to 166:1, or 166:1 to 83:1.

In some embodiments, the weight/weight ratio of the xylo-oligosaccharides to the high-intensity sweetener may be from 1000:1 to 666:1, 666:1 to 333:1, 333:1 to 166:1, or 166:1 to 83:1.

In some embodiments, the composition comprises xylobiose, wherein the weight/weight ratio of the xylobiose to the high-intensity sweetener may be from 1000:1 to 666:1, 666:1 to 333:1, 333:1 to 166:1, or 166:1 to 83:1.

In some embodiments, the composition comprises arabinosylated xylo-oligosaccharides, wherein the weight/weight ratio of the arabinosylated xylo-oligosaccharides to the high-intensity sweetener may be from 1000:1 to 666:1, 666:1 to 333:1, 333:1 to 166:1, or 166:1 to 83:1.

In some embodiments, the weight/weight ratio of the manno-oligosaccharides to the high-intensity sweetener may be from 1000:1 to 666:1, 666:1 to 333:1, 333:1 to 166:1, or 166:1 to 83:1.

In some embodiments, the composition comprises mannan-derived disaccharides, wherein the weight/weight ratio of the mannan-derived disaccharides to the high-intensity sweetener may be from 1000:1 to 666:1, 666:1 to 333:1, 333:1 to 166:1, or 166:1 to 83:1.

In some embodiments, the oligosaccharide component may comprise manno-oligosaccharides.

In some embodiments, the composition comprises a polysaccharide, a cellulosic polysaccharide, cellulose, a hemicellulosic polysaccharide, xylan, a polysaccharide derivative, a cellulose derivative, carboxymethylcellulose, a polysaccharide aggregate, a lignocellulosic material, or any combination thereof.

In some embodiments, the composition may comprise at most 30% polysaccharides by dry weight.

In some embodiments, the composition comprises a phenolic compound, a lignin, a portion of a lignin, a product of lignin breakdown, ferulic acid, a ferulic acid derivative, or any combination thereof.

In some embodiments, the oligosaccharide component may comprise less than 0.5, 0.1, 0.05 ppm Al, As, B, Ba, Be, Ca, Cd, Co, Cr, Cu, Fe, Hg, K, Li, Mg, Mn, Mo, Na, Ni, P, Pb, S, Sb, Se, Si, Sn, Sr, Ti, Tl, V and/or Zn.

In some embodiments, the composition may be a fat-based composition.

In some embodiments, the composition may be a water-based composition.

### BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings (also "figure" and "FIG." herein), of which:
FIG. 1 shows data illustrating the impact of combinations of stevia and oligosaccharides on sweetness and aftertaste perceptions of solutions containing them.
FIG. 2 shows data illustrating the impact of combinations of stevia and saccharide combinations on the sweetness, aftertaste (top) and sensory/visual (bottom) perceptions of cupcakes made using them.
FIG. 3 shows HPLC traces illustrating saccharides comprising the xylo-oligosaccharide composition (top) and the cello-oligosaccharide composition (bottom) used to make the saccharide mixture in recipes.
FIG. 4A illustrates muffins made using various combinations of high-intensity sweeteners and oligosaccharide mixtures.
FIG. 4B illustrates results from taste testing of muffins.
FIG. 5A illustrates cakes made using various bulking sugars and oligosaccharide mixture combinations.
FIG. 5B illustrates results from taste testing of cakes.
FIG. 6A illustrates dough made using various combinations of high-intensity sweeteners and oligosaccharide mixtures.
FIGS. 6B-6C illustrate cakes made using various combinations of high-intensity sweeteners and oligosaccharide mixtures.
FIG. 7A illustrates cakes made using various combinations of high-intensity sweeteners and oligosaccharide mixtures with different ratios of xylo-oligosaccharides and cello-oligosaccharides.
FIG. 7B illustrates cakes ranked from 1 to 4 for their color, 1 being lightest and 4 being darkest.
FIG. 7C illustrates results from taste testing of cakes.
FIGS. 8A-B illustrate cakes made using baking powder in addition to oligosaccharide mixture.
FIG. 9 illustrates cookies made using bulking sugars alone or in combination with oligosaccharide mixtures (called saccharides).
FIG. 10 illustrates cookies made using various concentrations of bulking sugars alone or in combination with oligosaccharide mixtures (called saccharides).

### DETAILED DESCRIPTION

### Introduction

Described herein are sweetener compositions comprising oligosaccharides. Such compositions can be used in or as foodstuff, cosmetics, or nutraceutical products. The compositions can be saccharide compositions at whole or at least in part. The compositions can be a combination of saccharides with other sweetener components.

The compositions comprise a oligosaccharide component and a high-intensity sweetener. The oligosaccharide component comprises or is an oligosaccharide mixture. The second component is a high-intensity sweetener.

The oligosaccharide component comprises or is an oligosaccharide mixture and further comprises oligosaccharides selected from manno-oligosaccharides, mixed-linkage glucan oligosaccharides, and/or xyloglucan oligosaccharides or a mixture thereof. The high-intensity sweetener can comprise or be a sugar or a sugar substitute. Each of the oligosaccharide component and the high-intensity sweetener may confer unique qualities and/or properties to the composition, the combination of which may be favorable. In some examples, the high-intensity sweetener can have a higher level of average sweetness per unit weight compared to the oligosaccharide component, therefore it can increase the overall average level of sweetness per unit weight of the composition as compared to a composition comprising the oligosaccharide component only. In some cases, the oligosaccharide component (e.g., oligosaccharide mixture) may reduce or help remove bitter undertones or aftertaste or other unpleasant tastes from the high-intensity sweetener. Therefore, a combination of the oligosaccharide component with the high-intensity sweetener may result in a composition which may be rich in sweetness while having decreased or substantially no bitterness or unpleasant taste or aftertaste associated with its sweetness.

Additionally, the oligosaccharide component may be capable of enhancing the caramelization capabilities of the composition and can contribute to a more desirable texture of a foodstuff (e.g., baked goods). The compositions provided in the present disclosure may be used as sweeteners (e.g., in a foodstuff), binders, and/or fiber content enhancers.

As used in the specification and claims, the singular forms "a," "an," and "the" include plural references unless the context clearly dictates otherwise. For example, the term "a sample" includes a plurality of samples, including mixtures thereof.

The terms "about" can mean within 1 or more than 1 standard deviation. Alternatively, "about" can mean a range of up to 10%, up to 5%, or up to 1% of a given value. For example, about can mean up to ±10%, ±9%, ±8%, ±7%, ±6%, ±5%, ±4%, ±3%, ±2%, or ±1% of a given value.

As used herein, "food" and "foodstuff" generally refer to any item destined for consumption, which may be consumption by a human or by any other animal. It may be food, feed, a beverage, or an ingredient to be used in the production of any of the above.

As used herein, "polysaccharide" generally refers to a saccharide polymer of any length greater than about 20 residues. Polysaccharides may be highly branched, lightly branched, or unbranched. Polysaccharides may include any manner of glycosidic bond in any combination; any number of, for example, α or β linkages; and any combination of monomer types, such as glucose, glucosamine, mannose, xylose, galactose, fucose, fructose, glucuronic acid, arabinose, or derivatives thereof, such as any combination of the above monomers decorated with acetyl or other groups. The polysaccharide may be a cellulosic or hemicellulosic polymer. Hemicellulosic polymers envisaged including xylan, glucuronoxylan, arabinoxylan, glucomannan, and xyloglucan. In some embodiments, the cellulosic polymer may be cellulose.

As used herein, "lignocellulose" generally refers to polysaccharide-comprising aggregates that are, or are derived from, plant cell wall material. For example, they may include one or more of the following polysaccharides associated together: cellulose, xylan, mannan, and mixed-linkage glucan.

As used herein "highly branched," "lightly branched," and "unbranched" generally refer to the number of side-chains per stretch of main chain in a saccharide. Highly branched saccharides have on average from 4 to 10 side chains per 10 main-chain residues, slightly branched saccharides have on average from 1 to 3 side chains per 10 main-chain residues, and unbranched saccharides have only one main chain and no side chains. The average is calculated by dividing the number of side chains in a saccharide by the number of main-chain residues.

As used herein, "saccharide" generally refers to any polysaccharide and/or oligosaccharide, such as monosaccharide and/or disaccharide.

As used herein, "oligosaccharide" generally refers to saccharide polymers having chain lengths less than or equal to about 20 saccharide residues. Oligosaccharides may be highly branched, lightly branched, or unbranched; and may include glycosidic bonds in any combination, any number of α or β linkages, and any combination of monomer types, such as glucose, glucosamine, mannose, xylose, galactose, fucose, fructose, glucuronic acid, arabinose, or derivatives thereof. Suitable derivatives include the above monomers including acetyl or other groups.

As used herein, "monosaccharide" and "disaccharide" generally refer to saccharide compounds consisting of one or two residues, respectively. Monosaccharides are compounds such as glucose, glucosamine, xylose, galactose, fucose, fructose, glucuronic acid, arabinose, galacturonic acid, or epimers or other derivatives thereof. Suitable derivatives include acetyl or other groups. Disaccharides are compounds consisting of two monosaccharides joined via any glycosidic bond.

As used herein, "cello-oligosaccharides" generally refers to oligosaccharides composed of one or more glucose residues linked by β-1,4-glycosidic bonds, and may be chemically related to that by oxidation, reduction, esterification, epimerization, or another chemical modification.

As used herein, "xylo-oligosaccharides" generally refers to oligosaccharides composed primarily of xylose residues (typically linked by β-1,4-glycosidic bonds) and may also contain glucuronic acid residues and/or arabinose residues and/or acetyl groups and/or any other modification, and may be chemically related to that by oxidation, reduction, esterification, epimerization, or another chemical modification.

As used herein, "mixed-linkage glucan-oligosaccharides" generally refers to oligosaccharides composed of one or more glucose residues linked by at least one β-1,3-glycosidic bond and at least one β-1,4-glycosidic bond, and may be chemically related to that by oxidation, reduction, esterification, epimerization, or another chemical modification

As used herein, "manno-oligosaccharides" generally refers to oligosaccharides composed of one or more mannose residues and optionally containing one or more glucose and/or galactose residues, and may be chemically related to that by oxidation, reduction, esterification, epimerization, or another chemical modification.

As used herein, "chito-oligosaccharides" generally refers to oligosaccharides composed of one or more glucosamine and/or N-acetyl-glucosamine residues, and may be chemically related to that by oxidation, reduction, esterification, epimerization, or another chemical modification.

As used herein, "cellulose" generally refers to polysaccharides composed of glucose residues linked by β-1,4-glycosidic bonds, and derivatives thereof. "Xylan" generally refers to polysaccharides composed of a backbone of xylose residues and may also contain glucuronic acid residues and/or arabinose residues and/or acetyl groups and/or any other modification. "Mixed-linkage glucan" generally refers to polysaccharides composed of glucose residues linked by β-1,3-glycosidic bonds and β-1,4-glycosidic bonds. "Mannan" generally refers to polysaccharides composed of greater than 40% mannose residues and optionally containing glucose and/or galactose residues. "Chitin" or "chitosan" generally refer to polysaccharides composed of glucosamine and/or N-acetyl-glucosamine residues.

The present disclosure provides a composition comprising two or more oligosaccharides. The composition comprises an oligosaccharide component. The oligosaccharide component comprises or is an oligosaccharide mixture. The oligosaccharide mixture comprises a mixture of 2, 3, 4, 5, 6, 7, 8, or more oligosaccharides. In some cases, the oligosaccharide mixture may comprise 2 oligosaccharides. In some cases, the oligosaccharide mixture may comprise 3 oligosaccharides. Optionally the oligosaccharide component (e.g., the oligosaccharide mixture) further comprises oligosaccharides selected from mixed-linkage glucan oligosaccharides, manno-oligosaccharides, and/or other oligosaccharides.

The oligosaccharide mixture may comprise mixed-linkage glucan oligosaccharides. Mixed-linkage glucan oligosaccharides may comprise a mixture of mixed-linkage glucan oligosaccharide with a degree of polymerization of from two to five (inclusive).

The oligosaccharide mixture may comprise manno-oligosaccharides. Manno-oligosaccharides may comprise a mixture of manno-oligosaccharides with degrees of polymerization of from two to twelve (inclusive).

The oligosaccharide mixture may comprise xyloglucan oligosaccharides. Xyloglucan oligosaccharides may comprise a mixture of xyloglucan oligosaccharides with degrees of polymerization of from four to twelve (inclusive).

The oligosaccharide mixture may comprise chito-oligosaccharides. Chito-oligosaccharides may comprise a chito-oligosaccharides mixture comprising chito-oligosaccharides with degrees of polymerization of from two to twelve (inclusive).

The oligosaccharide component comprises at least two types of oligosaccharides and optionally may comprise mixed-linkage glucan oligosaccharides with a degree of polymerization of from two to five, manno-oligosaccharides having a degree of polymerization of from two to twelve, and xyloglucan oligosaccharides having a degree of polymerization of from four to twelve.

Provided that the oligosaccharide component comprises xylo-oligosaccharides with a degree of polymerization (DP) of two to twelve and cello-oligosaccharides with a DP of two to six, wherein the xylo-oligosaccharides and the cello-oligosaccharides are present at a xylo-oligosaccharide to cello-oligosaccharide w/w ratio of 19:1 to 1:1; then the oligosaccharide component may comprise various oligosaccharides at varying amounts. The amounts of each oligosaccharide, as well as their ratios may depend on the desired properties of the composition and/or the foodstuff the composition is intended to be used in and may be adjusted and/or optimized.

Provided that the oligosaccharide component comprises xylo-oligosaccharides with a degree of polymerization (DP) of two to twelve and cello-oligosaccharides with a DP of two to six, wherein the xylo-oligosaccharides and the cello-oligosaccharides are present at a xylo-oligosaccharide to cello-oligosaccharide w/w ratio of 19:1 to 1:1; then the amounts of each of the oligosaccharides in the oligosaccharide component (e.g., the oligosaccharide mixture) may vary. These amounts may vary depending on the desired properties of the resulting foodstuff, pharmaceutical, cosmetic, or nutraceutical they are used in. The oligosaccharide component comprises at least two types of oligosaccharides. For example, the two oligosaccharides may be present in a ratio of about 1:2, 1:3, 1:4, 1:5, 1:6, 1:7, 1:8, 1:9, 1:10, 1:12, 1:15, 1:17, 1:19, 1:20, 2:1, 3:1, 4:1, 5:1, 6:1, 7:1, 8:1, 9:1, 10:1, 12:1, 15:1, 17:1, 19:1 or other suitable ratios.

In some cases, the oligosaccharide component may further comprise a third type of oligosaccharide. In some examples the oligosaccharide component may further comprise a fourth type of oligosaccharide. In some examples, the oligosaccharide component may comprise a third oligosaccharide, a fourth oligosaccharide, and a fifth oligosaccharide. The oligosaccharide component may further comprise a third oligosaccharide, a fourth oligosaccharide, a fifth oligosaccharide, and a sixth oligosaccharide. The oligosaccharide component may comprise more than six types of oligosaccharides. The third, fourth, fifth, sixth, and the rest of the type of oligosaccharides may comprise mixed-linkage glucan oligosaccharides with a degree of polymerization of from two to five, manno- oligosaccharides having a degree of polymerization of from two to twelve, and xyloglucan oligosaccharides having a degree of polymerization of from four to twelve.

### Combinations of oligosaccharides

The oligosaccharide component comprises or is an oligosaccharide mixture. In some examples, the oligosaccharide component may comprise three forms of oligosaccharides, for instance, cello-oligosaccharides, manno-oligosaccharides, and xylo-oligosaccharides. In some cases, the oligosaccharide component may comprise four forms of oligosaccharides, for instance, cello-oligosaccharides, manno-oligosaccharides, mixed-linkage glucan oligosaccharides, and xylo-oligosaccharides.

The oligosaccharide component comprises two forms of oligosaccharides, a first oligosaccharide and a second oligosaccharide. The oligosaccharide component may comprise 5% of a first oligosaccharide and 95% of a second oligosaccharide w/w. The oligosaccharide component may comprise about 10% of a first oligosaccharide and about 90% of a second oligosaccharide w/w. The oligosaccharide component may comprise about 15% of a first oligosaccharide and about 85% of a second oligosaccharide w/w. The oligosaccharide component may comprise about 20% of a first oligosaccharide and about 80% of a second oligosaccharide w/w. The oligosaccharide component may comprise about 25% of a first oligosaccharide and about 75% of a second oligosaccharide w/w. The oligosaccharide component may comprise about 30% of a first oligosaccharide and about 70% of a second oligosaccharide w/w. The oligosaccharide component may comprise about 35% of a first oligosaccharide and about 65% of a second oligosaccharide w/w. The oligosaccharide component may comprise about 40% of a first oligosaccharide and about 50% of a second oligosaccharide w/w. The oligosaccharide component may comprise about 45% of a first oligosaccharide and about 55% of a second oligosaccharide w/w. The oligosaccharide component may comprise 50% of a first oligosaccharide and 50% of a second oligosaccharide w/w.

The oligosaccharide component comprises two forms of oligosaccharides, for example, a first oligosaccharide and a second oligosaccharide. The oligosaccharide component may comprise 5% of a first oligosaccharide and 95% of a second oligosaccharide w/w. The oligosaccharide component may comprise 10% of a first oligosaccharide and 90% of a second oligosaccharide w/w. The oligosaccharide component may comprise 15% of a first oligosaccharide and 85% of a second oligosaccharide w/w. The oligosaccharide component may comprise 20% of a first oligosaccharide and 80% of a second oligosaccharide w/w. The oligosaccharide component may comprise 25% of a first oligosaccharide and 75% of a second oligosaccharide w/w. The oligosaccharide component may comprise 30% of a first oligosaccharide and 70% of a second oligosaccharide w/w.

In some embodiments, the oligosaccharide component may comprise three forms of oligosaccharides. The oligosaccharide component may comprise about 20% of a first oligosaccharide, about 40% of a second oligosaccharide, and about 40% of a third oligosaccharide w/w. The oligosaccharide component may comprise about 30% of a first oligosaccharide, about 30% of a second oligosaccharide, and about 40% of a third oligosaccharide w/w. An oligosaccharide mixture may comprise about 10% of a first oligosaccharide, about 10% of a second oligosaccharide, and about 80% of a third oligosaccharide w/w. The oligosaccharide component may comprise about 20% of a first oligosaccharide, about 20% of a second oligosaccharide, and about 60% of a third oligosaccharide w/w. The oligosaccharide component may comprise about 20% of a first oligosaccharide, about 30% of a second oligosaccharide, and about 50% of a third oligosaccharide w/w.

In some embodiments, the oligosaccharide component may comprise three forms of oligosaccharides. The oligosaccharide component may comprise 20% of a first oligosaccharide, 40% of a second oligosaccharide, and 40% of a third oligosaccharide w/w. The oligosaccharide component may comprise 30% of a first oligosaccharide, 30% of a second oligosaccharide, and 40% of a third oligosaccharide w/w. An oligosaccharide mixture may comprise 10% of a first oligosaccharide, 10% of a second oligosaccharide, and 80% of a third oligosaccharide w/w. The oligosaccharide component may comprise 20% of a first oligosaccharide, 20% of a second oligosaccharide, and 60% of a third oligosaccharide w/w. The oligosaccharide component may comprise 20% of a first oligosaccharide, 30% of a second oligosaccharide, and 50% of a third oligosaccharide w/w. In these embodiments, the oligosaccharide component comprises the xylo-oligosaccharides and the cello-oligosaccharides, and may further comprise a third type of oligosaccharide, for example manno-oligosaccharides or xyloglucan-oligosaccharides.

The oligosaccharide component comprises xylo-oligosaccharides and cello-oligosaccharides. The ratio of the xylo-oligosaccharides to the cello-oligosaccharides in the mixture may be 1:1. The ratio of the xylo-oligosaccharides to the cello-oligosaccharides in the mixture may be about 1:2. The ratio of the xylo-oligosaccharides to the cello-oligosaccharides in the mixture may be about 1:3. The ratio of the xylo-oligosaccharides to the cello-oligosaccharides in the mixture may be about 1:4. The ratio of the xylo-oligosaccharides to the cello-oligosaccharides in the mixture may be about 1:5. The ratio of the xylo-oligosaccharides to the cello-oligosaccharides in the mixture may be about 1:6. The ratio of the xylo-oligosaccharides to the cello-oligosaccharides in the mixture may be about 1:7. The ratio of the xylo-oligosaccharides to the cello-oligosaccharides in the mixture may be about 1:8. The ratio of the xylo-oligosaccharides to the cello-oligosaccharides in the mixture may be about 1:9. The ratio of the xylo-oligosaccharides to the cello-oligosaccharides in the mixture may be about 1:10. The ratio of the xylo-oligosaccharides to the cello-oligosaccharides in the mixture may be about 1:12. The ratio of the xylo-oligosaccharides to the cello-oligosaccharides in the mixture may be about 1:15. The ratio of the xylo-oligosaccharides to the cello-oligosaccharides in the mixture may be about 1:17. The ratio of the xylo-oligosaccharides to the cello-oligosaccharides in the mixture may be 1:19.

The ratio of a first oligosaccharide to a second oligosaccharide in the mixture may be 1:1. The ratio of a first oligosaccharide to a second oligosaccharide in the mixture may be 1:2. The ratio of a first oligosaccharide to a second oligosaccharide in the mixture may be 1:3. The ratio of a first oligosaccharide to a second oligosaccharide in the mixture may be 1:4. The ratio of a first oligosaccharide to a second oligosaccharide in the mixture may be 1:5. The ratio of a first oligosaccharide to a second oligosaccharide in the mixture may be 1:6. The ratio of a first oligosaccharide to a second oligosaccharide in the mixture may be 1:7. The ratio of a first oligosaccharide to a second oligosaccharide in the mixture may be 1:8. The ratio of a first oligosaccharide to a second oligosaccharide in the mixture may be 1:9. The ratio of a first oligosaccharide to a second oligosaccharide in the mixture may be 1:10. The ratio of a first oligosaccharide to a second oligosaccharide in the mixture may be 1:12. The ratio of a first oligosaccharide to a second oligosaccharide in the mixture may be 1:15. The ratio of a first oligosaccharide to a second oligosaccharide in the mixture may be 1:17. The ratio of a first oligosaccharide to a second oligosaccharide in the mixture may be 1:19. Ranges between the ratios provided herein are also within the scope of the present disclosure. For example, the ratio of the first oligosaccharide to the second oligosaccharide in the mixture may be from 1:1 to 1:2.

In one example, the ratio of cello-oligosaccharides to xylo-oligosaccharides in the mixture may be 1:1. The ratio of cello-oligosaccharides to xylo-oligosaccharides in the mixture may be 1:2. The ratio of cello-oligosaccharides to xylo-oligosaccharides in the mixture may be 1:3. The ratio of cello-oligosaccharides to xylo-oligosaccharides in the mixture may be 1:4. The ratio of cello-oligosaccharides to xylo-oligosaccharides in the mixture may be 1:5. The ratio of cello-oligosaccharides to xylo-oligosaccharides in the mixture may be 1:6. The ratio of cello-oligosaccharides to xylo-oligosaccharides in the mixture may be 1:7. The ratio of cello-oligosaccharides to xylo-oligosaccharides in the mixture may be 1:8. The ratio of cello-oligosaccharides to xylo-oligosaccharides in the mixture may be 1:9. The ratio of cello-oligosaccharides to xylo-oligosaccharides in the mixture may be 1:10. The ratio of cello-oligosaccharides to xylo-oligosaccharides in the mixture may be 1:12. The ratio of cello-oligosaccharides to xylo-oligosaccharides in the mixture may be 1:15. The ratio of cello-oligosaccharides to xylo-oligosaccharides in the mixture may be 1:17. The ratio of cello-oligosaccharides to xylo-oligosaccharides in the mixture may be 1:19. Ranges between the ratios provided herein are also within the scope of the present disclosure. For example, the ratio of the cello-oligosaccharides to the xylo-oligosaccharides in the mixture may be from 1:1 to 1:2.

The ratio of the xylo-oligosaccharide to the cello-oligosaccharide in the mixture may be about 2:1.

The ratio of the xylo-oligosaccharide to the cello-oligosaccharide in the mixture may be 2:1.

The ratio of the xylo-oligosaccharide to the cello-oligosaccharide in the mixture may be about 3:1. The ratio of the xylo-oligosaccharide to the cello-oligosaccharide in the mixture may be about 3:2.

The ratio of the xylo-oligosaccharide to the cello-oligosaccharide in the mixture may be 3:1. The ratio of the xylo-oligosaccharide to the cello-oligosaccharide in the mixture may be 3:2.

### Compositions comprising xylo-oligosaccharides

The xylo-oligosaccharides may comprise xylo-oligosaccharides with one or more side branches, xylo-oligosaccharides with one or more glucuronosyl side branches, xylo-oligosaccharides with one or more methylglucurosyl side branches, xylo-oligosaccharides with one or more arabinosyl side branches, and/or combinations thereof.

In some cases, the concentration of xylo-oligosaccharides with a degree of polymerization of two in the xylo-oligosaccharide mixture may be from 2% to 80% w/w. The concentration of xylo-oligosaccharides with a degree of polymerization of two may be at least 2%, 4%, 6%, 8%, 10%, 12%, 15%, 18%, 20%, 25%, 30%, 40%, 50% or 60% w/w. The concentration of xylo-oligosaccharides with a degree of polymerization of two may be in some cases, for instance, up to 35%, 40%, 45%, 50%, 55%, 60%, 65%, 70%, 75%, or 80% w/w.

In some cases, the concentration of xylo-oligosaccharides with a degree of polymerization of three in a xylo-oligosaccharide mixture may be from 0.5% to 20% w/w. The concentration of xylo-oligosaccharides with a degree of polymerization of three may be at least 0.5%, 1%, 2%, 4%, 6%, 8%, 10%, 12%, 15%, 18%, or 20% w/w. The concentration of xylo-oligosaccharides with a degree of polymerization of three may be in some cases, for instance, up to 0.5%, 1%, 2%, 5%, 10%, or 15% w/w.

In some cases, the concentration of xylo-oligosaccharides with a degree of polymerization of four in the xylo-oligosaccharide mixture may be from 0.1% to 20% w/w. The concentration of xylo-oligosaccharides with a degree of polymerization of four may be at least 0.1%, 0.5%, 1%, 2%, 4%, 6%, 8%, 10%, 12%, 15%, 18%, or 20% w/w. The concentration of xylo-oligosaccharides with a degree of polymerization of four may be in some cases, for instance, up to 0.1%, 0.5%, 1%, 2%, 5%, 10%, or 15% w/w.

In some cases, the concentration of xylo-oligosaccharides with a degree of polymerization of five in the xylo-oligosaccharide mixture may be from 0.1% to 20% w/w. The concentration of xylo-oligosaccharides with a degree of polymerization of five may be at least 0.1%, 0.5%, 1%, 2%, 4%, 6%, 8%, 10%, 12%, 15%, 18%, or 20% w/w. The concentration of xylo-oligosaccharides with a degree of polymerization of five may be in some cases, for instance, up to 0.1%, 0.5%, 1%, 2%, 5%, 10%, or 15% w/w.

In some cases, the concentration of xylo-oligosaccharides with a degree of polymerization of six in the xylo-oligosaccharide mixture may be from 0.1% to 25% w/w. The concentration of xylo-oligosaccharides with a degree of polymerization of six may be at least 0.1%, 0.5%, 1%, 2%, 4%, 6%, 8%, 10%, 12%, 15%, 18%, or 20% w/w. The concentration of xylo-oligosaccharides with a degree of polymerization of six may be in some cases, for instance, up to 0.5%, 1%, 2%, 5%, 10%, or 15% w/w.

In some cases, the concentration of xylo-oligosaccharides with a degree of polymerization of seven in the xylo-oligosaccharide mixture may be from 0.1% to 20% w/w. The concentration of xylo-oligosaccharides with a degree of polymerization of seven may be at least 0.1%, 0.5%, 1%, 2%, 4%, 6%, 8%, 10%, 12%, 15%, 18%, or 20% w/w. The concentration of xylo-oligosaccharides with a degree of polymerization of seven may be in some cases, for instance, up to 0.1%, 0.5%, 1%, 2%, 5%, 10%, or 15% w/w.

In some cases, the concentration of xylo-oligosaccharides with a degree of polymerization of eight in a xylo-oligosaccharide mixture may be from 0.1% to 15% w/w. The concentration of xylo-oligosaccharides with a degree of polymerization of eight may be at least 0.1%, 0.5%, 1%, 2%, 4%, 6%, 8%, 10%, 12%, 15%, 18%, or 20% w/w. The concentration of xylo-oligosaccharides with a degree of polymerization of eight may be in some cases, for instance, up to 0.1%, 0.5%, 1%, 2%, 5%, 10%, or 15% w/w.

The concentration of xylo-oligosaccharides with a degree of polymerization of nine in a xylo-oligosaccharide mixture may be from 0.1% to 15% w/w. The concentration of xylo-oligosaccharides with a degree of polymerization of nine may be at least 0.1%, 0.5%, 1%, 2%, 4%, 6%, 8%, 10%, or 12% w/w. The concentration of xylo-oligosaccharides with a degree of polymerization of nine may be in some cases, for instance, up to 0.1%, 0.5%, 1%, 2%, 5%, 10% or 15% w/w.

The concentration of xylo-oligosaccharides with a degree of polymerization of ten in a xylo-oligosaccharide mixture may be from 0.1% to 15% w/w. The concentration of xylo-oligosaccharides with a degree of polymerization often may be at least 0.1%, 0.5%, 1%, 2%, 4%, 6%, 8%, 10%, 12% or 15% w/w. The concentration of xylo-oligosaccharides with a degree of polymerization of ten may be in some cases, for instance, up to 0.1%, 0.5%, 1%, 2%, 5%, 10%, or 15% w/w.

The concentration of xylo-oligosaccharides with a degree of polymerization of eleven in a xylo-oligosaccharide mixture may be from 0.1% to 15% w/w. The concentration of xylo-oligosaccharides with a degree of polymerization of eleven may be at least 0.1%, 0.5%, 1%, 2%, 4%, 6%, 8%, 10%, 12% or 15% w/w. The concentration of xylo-oligosaccharides with a degree of polymerization of eleven may be in some cases, for instance, up to 0.1%, 0.5%, 1%, 2%, 5%, 10%, or 15% w/w.

The concentration of xylo-oligosaccharides with a degree of polymerization of twelve in a xylo-oligosaccharide mixture may be from 0.1% to 15% w/w. The concentration of xylo-oligosaccharides with a degree of polymerization of twelve may be at least 0.1%, 0.5%, 1%, 2%, 4%, 6%, 8%, 10%, 12%, or 15% w/w. The concentration of xylo-oligosaccharides with a degree of polymerization of twelve may be in some cases, for instance, up to 0.1%, 0.5%, 1%, 2%, 5%, 10%, or 15% w/w.

In some examples, the concentration of xylo-oligosaccharides in the oligosaccharide component may be from 5% to 95% w/w. The concentration of xylo-oligosaccharides in the oligosaccharide component may be at least 5% w/w. The concentration of xylo-oligosaccharides in the oligosaccharide component may be at most 95% w/w. The concentration of xylo-oligosaccharides in the oligosaccharide component may be 5% to 10%, 5% to 20%, 5% to 30%, 5% to 40%, 5% to 50%, 5% to 60%, 5% to 70%, 5% to 80%, 5% to 90%, 5% to 95%, 10% to 20%, 10% to 30%, 10% to 40%, 10% to 50%, 10% to 60%, 10% to 70%, 10% to 80%, 10% to 90%, 10% to 95%, 20% to 30%, 20% to 40%, 20% to 50%, 20% to 60%, 20% to 70%, 20% to 80%, 20% to 90%, 20% to 95%, 30% to 40%, 30% to 50%, 30% to 60%, 30% to 70%, 30% to 80%, 30% to 90%, 30% to 95%, 40% to 50%, 40% to 60%, 40% to 70%, 40% to 80%, 40% to 90%, 40% to 95%, 50% to 60%, 50% to 70%, 50% to 80%, 50% to 90%, 50% to 95%, 60% to 70%, 60% to 80%, 60% to 90%, 60% to 95%, 70% to 80%, 70% to 90%, 70% to 95%, 80% to 90%, 80% to 95%, or 90% to 95% w/w. The concentration of xylo-oligosaccharides in the oligosaccharide component may be about 5%, 10%, 20%, 30%, 40%, 50%, 60%, 70%, 80%, 90%, or 95% w/w. The concentration of xylo-oligosaccharides in the oligosaccharide component may be at least 5%, 10%, 20%, 30%, 40%, 50%, 60%, 70%, 80% or 90% w/w. The concentration of xylo-oligosaccharides in the oligosaccharide component may be at most 10%, 20%, 30%, 40%, 50%, 60%, 70%, 80%, 90%, or 95% w/w.

The concentration of xylo-oligosaccharides in a sweetener composition comprising two or more components may be from 1% to 70% w/w. The concentration of xylo-oligosaccharides in a sweetener composition comprising two or more components may be at least 1% w/w. The concentration of xylo-oligosaccharides in a sweetener composition comprising two or more components may be at most 70% w/w. The concentration of xylo-oligosaccharides in a sweetener composition comprising two or more components may be 1% to 10%, 1% to 15%, 1% to 20%, 1% to 30%, 1% to 40%, 1% to 50%, 1% to 60%, 1% to 70%, 10% to 15%, 10% to 20%, 10% to 30%, 10% to 40%, 10% to 50%, 10% to 60%, 10% to 70%, 15% to 20%, 15% to 30%, 15% to 40%, 15% to 50%, 15% to 60%, 15% to 70%, 20% to 30%, 20% to 40%, 20% to 50%, 20% to 60%, 20% to 70%, 30% to 40%, 30% to 50%, 30% to 60%, 30% to 70%, 40% to 50%, 40% to 60%, 40% to 70%, 50% to 60%, 50% to 70%, or 60% to 70% w/w. The concentration of xylo-oligosaccharides in a sweetener composition comprising two or more components may be 1%, 10%, 15%, 20%, 30%, 40%, 50%, 60%, or 70% w/w. The concentration of xylo-oligosaccharides in a sweetener composition comprising two or more components may be at least 1%, 10%, 15%, 20%, 30%, 40%, 50% or 60% w/w. The concentration of xylo-oligosaccharides in a sweetener composition comprising two or more components may be at most 10%, 15%, 20%, 30%, 40%, 50%, 60%, or 70% w/w.

In some cases, the concentration of xylo-oligosaccharides in a composition such as a consumable composition or foodstuff may be about 0.1%, 0.5%, 1%, 5%, 10%, 15%, 20%, 25%, 30%, 35%, 40%, 45%, or 50% w/w. In some cases, the concentration of xylo-oligosaccharides in a composition may be at least 0.1%, 0.5%, 1%, 5%, 10%, 15%, 20%, 25%, 30%, 35%, 40%, or 45% w/w. In some cases, the concentration of xylo-oligosaccharides in a composition may be at most 5%, 10%, 15%, 20%, 25%, 30%, 35%, 40%, 45%, or 50% w/w.

### Compositions comprising cello-oligosaccharides

Cello-oligosaccharides may comprise cellobiose. In some examples the cello-oligosaccharides may comprise at least 20%, at least 25%, at least 30%, at least 35%, at least 40%, at least 45%, at least 50%, at least 55%, at least 50%, at least 60%, at least 65%, at least 70%, at least 80%, at least 90% or amounts of cellobiose.

In some cases, the concentration of cello-oligosaccharides with a degree of polymerization of two in the cello-oligosaccharide mixture may be from about 2% to about 80% w/w. The concentration of cello-oligosaccharides with a degree of polymerization of two may be at least 2%, 4%, 6%, 8%, 10%, 12%, 15%, 18%, 20%, 25%, or 30% w/w. The concentration of cello-oligosaccharides with a degree of polymerization of two may be in some cases, for instance, at least 35%, 40%, 45%, 50%, 55%, 60%, 65%, 70%, 75%, or 80% w/w.

In some cases, the concentration of cello-oligosaccharides with a degree of polymerization of three in a cello-oligosaccharide mixture may be from 0.5% to 20% w/w. The concentration of cello-oligosaccharides with a degree of polymerization of three may be at least 0.5%, 1%, 2%, 4%, 6%, 8%, 10%, 12%, 15%, 18%, or 20% w/w. The concentration of cello-oligosaccharides with a degree of polymerization of three may be in some cases, for instance, up to 0.5%, 1%, 2%, 5%, 10%, or 15% w/w.

In some cases, the concentration of cello-oligosaccharides with a degree of polymerization of four in the cello-oligosaccharide mixture may be from 0.1% to 20% w/w. The concentration of cello-oligosaccharides with a degree of polymerization of four may be at least 0.1%, 0.5%, 1%, 2%, 4%, 6%, 8%, 10%, 12%, 15%, 18%, or 20% w/w. The concentration of cello-oligosaccharides with a degree of polymerization of four may be in some cases, for instance, up to 0.1%, 0.5%, 1%, 2%, 5%, 10%, or 15% w/w.

In some cases, the concentration of cello-oligosaccharides with a degree of polymerization of five in the cello-oligosaccharide mixture may be from 0.1% to 20% w/w. The concentration of cello-oligosaccharides with a degree of polymerization of five may be at least 0.1%, 0.5%, 1%, 2%, 4%, 6%, 8%, 10%, 12%, 15%, 18%, or 20% w/w. The concentration of cello-oligosaccharides with a degree of polymerization of five may be in some cases, for instance, up to 0.1%, 0.5%, 1%, 2%, 5%, 10%, or 15% w/w.

In some cases, the concentration of cello-oligosaccharides with a degree of polymerization of six in the cello-oligosaccharide mixture may be from 0.1% to 25% w/w. The concentration of cello-oligosaccharides with a degree of polymerization of six may be at least 0.1%, 0.5%, 1%, 2%, 4%, 6%, 8%, 10%, 12%, 15%, 18%, or 20% w/w. The concentration of cello-oligosaccharides with a degree of polymerization of six may be in some cases, for instance, up to 0.5%, 1%, 2%, 5%, 10%, or 15% w/w.

The concentration of cello-oligosaccharides in the oligosaccharide component may be at least 5% w/w. The concentration of cello-oligosaccharides in the oligosaccharide component may be 5% to 10%, 5% to 20%, 5% to 30%, 5% to 40%, 5% to 50%, 10% to 20%, 10% to 30%, 10% to 40%, 10% to 50%, 20% to 30%, 20% to 40%, 20% to 50%, 30% to 40%, 30% to 50%, or 40% to 50% w/w. The concentration of cello-oligosaccharides in the oligosaccharide component may be 5%, 10%, 20%, 30%, 40%, or 50% w/w. The concentration of cello-oligosaccharides in the oligosaccharide component may be at least 5%, 10%, 20%, 30%, or 40% w/w. The concentration of cello-oligosaccharides in the oligosaccharide component may be at most 5%, 10%, 20%, 30%, 40%, or 50% w/w.

The concentration of cello-oligosaccharides in a sweetener composition comprising two or more components may be at least 1% w/w. The concentration of cello-oligosaccharides in a sweetener composition comprising two or more components may be 1% to 10%, 1% to 15%, 1% to 20%, 1% to 30%, 1% to 40%, 10% to 15%, 10% to 20%, 10% to 30%, 10% to 40%, 15% to 20%, 15% to 30%, 15% to 40%, 20% to 30%, 20% to 40%, or 30% to 40% w/w. The concentration of cello-oligosaccharides in a sweetener composition comprising two or more components may be 1%, 10%, 15%, 20%, 30%, or 40% w/w. The concentration of cello-oligosaccharides in a sweetener composition comprising two or more components may be at least 1%, 10%, 15%, 20%, 30%, or 40% w/w. The concentration of cello-oligosaccharides in a sweetener composition comprising two or more components may be at most 10%, 15%, 20%, 30%, or 40% w/w.

In some cases, when the composition of the invention is used in a composition such as a consumable composition or foodstuff, the concentration of cello-oligosaccharides may be about 0.1%, 0.5%, 1%, 5%, 10%, 15%, 20%, 25% or 30% w/w. In some cases, the concentration of cello-oligosaccharides in a composition may be at least 0.1%, 0.5%, 1%, 5%, 10%, 15%, 20%, 25%, 30% w/w. In some cases, the concentration of cello-oligosaccharides in a composition may be at most 5%, 10%, 15%, 20% or 25% w/w.

### Compositions further comprising manno-oligosaccharides

In some examples, the oligosaccharide component may further comprise manno-oligosaccharides. Manno-oligosaccharides may comprise a manno-oligosaccharide mixture comprising manno-oligosaccharides with degrees of polymerization of from two to twelve (inclusive).

In some cases, the concentration of manno-oligosaccharides with a degree of polymerization of two in the manno-oligosaccharide mixture may be from 2% to 30% w/w. The concentration of manno-oligosaccharides with a degree of polymerization of two may be at least 2%, 4%, 6%, 8%, 10%, 12%, 15%, 18%, 20%, 25%, or 30% w/w.

In some cases, the concentration of manno-oligosaccharides with a degree of polymerization of three in a manno-oligosaccharide mixture may be from 0.5% to 20% w/w. The concentration of manno-oligosaccharides with a degree of polymerization of three may be at least 0.5%, 1%, 2%, 4%, 6%, 8%, 10%, 12%, 15%, 18%, or 20% w/w. The concentration of manno-oligosaccharides with a degree of polymerization of three may be in some cases, for instance, up to 0.5%, 1%, 2%, 5%, 10%, or 15% w/w.

In some cases, the concentration of manno-oligosaccharides with a degree of polymerization of four in the manno-oligosaccharide mixture may be from 0.1% to 20% w/w. The concentration of manno-oligosaccharides with a degree of polymerization of four may be at least 0.1%, 0.5%, 1%, 2%, 4%, 6%, 8%, 10%, 12%, 15%, 18%, or 20% w/w. The concentration of manno-oligosaccharides with a degree of polymerization of four may be in some cases, for instance, up to 0.1%, 0.5%, 1%, 2%, 5%, 10%, or 15% w/w.

In some cases, the concentration of manno-oligosaccharides with a degree of polymerization of five in the manno-oligosaccharide mixture may be from 0.1% to 20% w/w. The concentration of manno-oligosaccharides with a degree of polymerization of five may be at least 0.1%, 0.5%, 1%, 2%, 4%, 6%, 8%, 10%, 12%, 15%, 18%, or 20% w/w. The concentration of manno-oligosaccharides with a degree of polymerization of five may be in some cases, for instance, up to 0.1%, 0.5%, 1%, 2%, 5%, 10%, or 15% w/w.

In some cases, the concentration of manno-oligosaccharides with a degree of polymerization of six in the manno-oligosaccharide mixture may be from 0.1% to 25% w/w. The concentration of manno-oligosaccharides with a degree of polymerization of six may be at least 0.1%, 0.5%, 1%, 2%, 4%, 6%, 8%, 10%, 12%, 15%, 18%, or 20% w/w. The concentration of manno-oligosaccharides with a degree of polymerization of six may be in some cases, for instance, up to 0.5%, 1%, 2%, 5%, 10%, or 15% w/w.

In some cases, the concentration of manno-oligosaccharides with a degree of polymerization of seven in the manno-oligosaccharide mixture may be from 0.1% to 20% w/w. The concentration of manno-oligosaccharides with a degree of polymerization of seven may be at least 0.1%, 0.5%, 1%, 2%, 4%, 6%, 8%, 10%, 12%, 15%, 18%, or 20% w/w. The concentration of manno-oligosaccharides with a degree of polymerization of seven may be in some cases, for instance, up to 0.1%, 0.5%, 1%, 2%, 5%, 10%, or 15% w/w.

In some cases, the concentration of manno-oligosaccharides with a degree of polymerization of eight in a manno-oligosaccharide mixture may be from 0.1% to 15% w/w. The concentration of manno-oligosaccharides with a degree of polymerization of eight may be at least 0.1%, 0.5%, 1%, 2%, 4%, 6%, 8%, 10%, 12%, 15%, 18%, or 20% w/w. The concentration of manno-oligosaccharides with a degree of polymerization of eight may be in some cases, for instance, up to 0.1%, 0.5%, 1%, 2%, 5%, 10%, or 15% w/w.

The concentration of manno-oligosaccharides with a degree of polymerization of nine in a manno-oligosaccharide mixture may be from 0.1% to 15% w/w. The concentration of manno-oligosaccharides with a degree of polymerization of nine may be at least 0.1%, 0.5%, 1%, 2%, 4%, 6%, 8%, 10% or 12% w/w. The concentration of manno-oligosaccharides with a degree of polymerization of nine may be in some cases, for instance, up to 0.1%, 0.5%, 1%, 2%, 5%, 10%, or 15% w/w.

The concentration of manno-oligosaccharides with a degree of polymerization of ten in a manno-oligosaccharide mixture may be from 0.1% to 15% w/w. The concentration of manno-oligosaccharides with a degree of polymerization often may be at least 0.1%, 0.5%, 1%, 2%, 4%, 6%, 8%, 10%, 12% or 15% w/w. The concentration of manno-oligosaccharides with a degree of polymerization of ten may be in some cases, for instance, up to 0.1%, 0.5%, 1%, 2%, 5%, 10%, or 15% w/w.

The concentration of manno-oligosaccharides with a degree of polymerization of eleven in a manno-oligosaccharide mixture may be from 0.1% to 15% w/w. The concentration of manno-oligosaccharides with a degree of polymerization of eleven may be at least 0.1%, 0.5%, 1%, 2%, 4%, 6%, 8%, 10%, 12% or 15% w/w. The concentration of manno-oligosaccharides with a degree of polymerization of eleven may be in some cases, for instance, up to 0.1%, 0.5%, 1%, 2%, 5%, 10%, or 15% w/w.

The concentration of manno-oligosaccharides with a degree of polymerization of twelve in a manno-oligosaccharide mixture may be from 0.1% to 15% w/w. The concentration of manno-oligosaccharides with a degree of polymerization of twelve may be at least 0.1%, 0.5%, 1%, 2%, 4%, 6%, 8%, 10%, 12% or 15% w/w. The concentration of manno-oligosaccharides with a degree of polymerization of twelve may be in some cases, for instance, up to 0.1%, 0.5%, 1%, 2%, 5%, 10%, or 15% w/w.

In some examples, the concentration of manno-oligosaccharides in the oligosaccharide component may be 5% to 95% w/w. The concentration of manno-oligosaccharides in the oligosaccharide component may be at least 5% w/w. The concentration of manno-oligosaccharides in the oligosaccharide component may be at most 95% w/w. The concentration of manno-oligosaccharides in the oligosaccharide component may be 5% to 10%, 5% to 20%, 5% to 30%, 5% to 40%, 5% to 50%, 5% to 60%, 5% to 70%, 5% to 80%, 5% to 90%, 5% to 95%, 10% to 20%, 10% to 30%, 10% to 40%, 10% to 50%, 10% to 60%, 10% to 70%, 10% to 80%, 10% to 90%, 10% to 95%, 20% to 30%, 20% to 40%, 20% to 50%, 20% to 60%, 20% to 70%, 20% to 80%, 20% to 90%, 20% to 95%, 30% to 40%, 30% to 50%, 30% to 60%, 30% to 70%, 30% to 80%, 30% to 90%, 30% to 95%, 40% to 50%, 40% to 60%, 40% to 70%, 40% to 80%, 40% to 90%, 40% to 95%, 50% to 60%, 50% to 70%, 50% to 80%, 50% to 90%, 50% to 95%, 60% to 70%, 60% to 80%, 60% to 90%, 60% to 95%, 70% to 80%, 70% to 90%, 70% to 95%, 80% to 90%, 80% to 95%, or 90% to 95% w/w. The concentration of manno-oligosaccharides in the oligosaccharide component may be 5%, 10%, 20%, 30%, 40%, 50%, 60%, 70%, 80%, 90%, or 95% w/w. The concentration of manno-oligosaccharides in the oligosaccharide component may be at least 5%, 10%, 20%, 30%, 40%, 50%, 60%, 70%, 80% or 90% w/w. The concentration of manno-oligosaccharides in the oligosaccharide component may be at most 10%, 20%, 30%, 40%, 50%, 60%, 70%, 80%, 90%, or 95% w/w.

The concentration of manno-oligosaccharides in a sweetener composition comprising two or more components may be 1% to 70% w/w. The concentration of manno-oligosaccharides in a sweetener composition comprising two or more components may be at least 1% w/w. The concentration of manno-oligosaccharides in a sweetener composition comprising two or more components may be at most 70% w/w. The concentration of manno-oligosaccharides in a sweetener composition comprising two or more components may be 1% to 10%, 1% to 15%, 1% to 20%, 1% to 30%, 1% to 40%, 1% to 50%, 1% to 60%, 1% to 70%, 10% to 15%, 10% to 20%, 10% to 30%, 10% to 40%, 10% to 50%, 10% to 60%, 10% to 70%, 15% to 20%, 15% to 30%, 15% to 40%, 15% to 50%, 15% to 60%, 15% to 70%, 20% to 30%, 20% to 40%, 20% to 50%, 20% to 60%, 20% to 70%, 30% to 40%, 30% to 50%, 30% to 60%, 30% to 70%, 40% to 50%, 40% to 60%, 40% to 70%, 50% to 60%, 50% to 70%, or 60% to 70% w/w. The concentration of manno-oligosaccharides in a sweetener composition comprising two or more components may be 1%, 10%, 15%, 20%, 30%, 40%, 50%, 60%, or 70% w/w. The concentration of manno-oligosaccharides in a sweetener composition comprising two or more components may be at least 1%, 10%, 15%, 20%, 30%, 40%, 50% or 60% w/w. The concentration of manno-oligosaccharides in a sweetener composition comprising two or more components may be at most 10%, 15%, 20%, 30%, 40%, 50%, 60%, or 70% w/w.

In some cases, when the composition of the invention is used in a composition such as a consumable composition or foodstuff, the concentration of manno-oligosaccharides may be about 0.1%, 0.5%, 1%, 5%, 10%, 15%, 20%, 25%, 30%, 35%, 40%, 45%, or 50% w/w. In some cases, the concentration of manno-oligosaccharides in a composition may be at least 0.1%, 0.5%, 1%, 5%, 10%, 15%, 20%, 25%, 30%, 35%, 40%, or 45% w/w. In some cases, the concentration of manno-oligosaccharides in a composition may be at most 5%, 10%, 15%, 20%, 25%, 30%, 35%, 40%, 45%, or 50% w/w.

### Compositions further comprising xyloglucan-oligosaccharides

In some examples, the oligosaccharide component may further comprise xyloglucan-oligosaccharides. xyloglucan-oligosaccharides may comprise a xyloglucan-oligosaccharides mixture comprising xyloglucan-oligosaccharides with degrees of polymerization of from four to twelve (inclusive).

In some cases, the concentration of xyloglucan-oligosaccharides with a degree of polymerization of four in the xyloglucan-oligosaccharide mixture may be from 0.1% to 50% w/w. The concentration of xyloglucan-oligosaccharides with a degree of polymerization of four may be at least 0.1%, 0.5%, 1%, 2%, 4%, 6%, 8%, 10%, 12%, 15%, 18%, 20%, 25%, 30%, 40% or 50% w/w. The concentration of xyloglucan-oligosaccharides with a degree of polymerization of four may be in some cases, for instance, up to 0.1%, 0.5%, 1%, 2%, 5%, 10%, 15%, 20%, 25%, 30%, 35%, 40%, or 45% w/w.

In some cases, the concentration of xyloglucan-oligosaccharides with a degree of polymerization of five in the xyloglucan-oligosaccharide mixture may be from 0.1% to 20% w/w. The concentration of xyloglucan-oligosaccharides with a degree of polymerization of five may be at least 0.1%, 0.5%, 1%, 2%, 4%, 6%, 8%, 10%, 12%, 15%, 18%, or 20% w/w. The concentration of xyloglucan-oligosaccharides with a degree of polymerization of five may be in some cases, for instance, up to 0.1%, 0.5%, 1%, 2%, 5%, 10%, or 15% w/w.

In some cases, the concentration of xyloglucan-oligosaccharides with a degree of polymerization of six in the xyloglucan-oligosaccharide mixture may be from 0.1% to 25% w/w. The concentration of xyloglucan-oligosaccharides with a degree of polymerization of six may be at least 0.1%, 0.5%, 1%, 2%, 4%, 6%, 8%, 10%, 12%, 15%, 18%, or 20% w/w. The concentration of xyloglucan-oligosaccharides with a degree of polymerization of six may be in some cases, for instance, up to 0.5%, 1%, 2%, 5%, 10%, or 15% w/w.

In some cases, the concentration of xyloglucan-oligosaccharides with a degree of polymerization of seven in the xyloglucan-oligosaccharide mixture may be from 0.1% to 20% w/w. The concentration of xyloglucan-oligosaccharides with a degree of polymerization of seven may be at least 0.1%, 0.5%, 1%, 2%, 4%, 6%, 8%, 10%, 12%, 15%, 18%, or 20% w/w. The concentration of xyloglucan-oligosaccharides with a degree of polymerization of seven may be in some cases, for instance, up to 0.1%, 0.5%, 1%, 2%, 5%, 10%, or 15% w/w.

In some cases, the concentration of xyloglucan-oligosaccharides with a degree of polymerization of eight in a xyloglucan-oligosaccharide mixture may be from 0.1% to 15% w/w. The concentration of xyloglucan-oligosaccharides with a degree of polymerization of eight may be at least 0.1%, 0.5%, 1%, 2%, 4%, 6%, 8%, 10%, 12%, 15%, 18%, or 20% w/w. The concentration of xyloglucan-oligosaccharides with a degree of polymerization of eight may be in some cases, for instance, up to 0.1%, 0.5%, 1%, 2%, 5%, 10%, or 15% w/w.

The concentration of xyloglucan-oligosaccharides with a degree of polymerization of nine in a xyloglucan-oligosaccharide mixture may be from 0.1% to 15% w/w. The concentration of xyloglucan-oligosaccharides with a degree of polymerization of nine may be at least 0.1%, 0.5%, 1%, 2%, 4%, 6%, 8%, 10% or 12% w/w. The concentration of xyloglucan-oligosaccharides with a degree of polymerization of nine may be in some cases, for instance, up to 0.1%, 0.5%, 1%, 2%, 5%, 10%, or 15% w/w.

The concentration of xyloglucan-oligosaccharides with a degree of polymerization of ten in a xyloglucan-oligosaccharide mixture may be from 0.1% to 15% w/w. The concentration of xyloglucan-oligosaccharides with a degree of polymerization often may be at least 0.1%, 0.5%, 1%, 2%, 4%, 6%, 8%, 10%, 12% or 15% w/w. The concentration of xyloglucan-oligosaccharides with a degree of polymerization of ten may be in some cases, for instance, up to 0.1%, 0.5%, 1%, 2%, 5%, 10%, or 15% w/w.

The concentration of xyloglucan-oligosaccharides with a degree of polymerization of eleven in a xyloglucan-oligosaccharide mixture may be from 0.1% to 15% w/w. The concentration of xyloglucan-oligosaccharides with a degree of polymerization of eleven may be at least 0.1%, 0.5%, 1%, 2%, 4%, 6%, 8%, 10%, 12%, or 15% w/w. The concentration of xyloglucan-oligosaccharides with a degree of polymerization of eleven may be in some cases, for instance, up to 0.1%, 0.5%, 1%, 2%, 5%, 10%, or 15% w/w.

The concentration of xyloglucan-oligosaccharides with a degree of polymerization of twelve in a xyloglucan-oligosaccharide mixture may be from 0.1% to 15% w/w. The concentration of xyloglucan-oligosaccharides with a degree of polymerization of twelve may be at least 0.1%, 0.5%, 1%, 2%, 4%, 6%, 8%, 10%, 12%, or 15% w/w. The concentration of xyloglucan-oligosaccharides with a degree of polymerization of twelve may be in some cases, for instance, up to 0.1%, 0.5%, 1%, 2%, 5%, 10%, or 15% w/w.

In some examples, the concentration of xyloglucan-oligosaccharides in the oligosaccharide component may be 5% to 95% w/w. The concentration of xyloglucan-oligosaccharides in the oligosaccharide component may be at least 5% w/w. The concentration of xyloglucan-oligosaccharides in the oligosaccharide component may be at most 95% w/w. The concentration of xyloglucan-oligosaccharides in the oligosaccharide component may be 5% to 10%, 5% to 20%, 5% to 30%, 5% to 40%, 5% to 50%, 5% to 60%, 5% to 70%, 5% to 80%, 5% to 90%, 5% to 95%, 10% to 20%, 10% to 30%, 10% to 40%, 10% to 50%, 10% to 60%, 10% to 70%, 10% to 80%, 10% to 90%, 10% to 95%, 20% to 30%, 20% to 40%, 20% to 50%, 20% to 60%, 20% to 70%, 20% to 80%, 20% to 90%, 20% to 95%, 30% to 40%, 30% to 50%, 30% to 60%, 30% to 70%, 30% to 80%, 30% to 90%, 30% to 95%, 40% to 50%, 40% to 60%, 40% to 70%, 40% to 80%, 40% to 90%, 40% to 95%, 50% to 60%, 50% to 70%, 50% to 80%, 50% to 90%, 50% to 95%, 60% to 70%, 60% to 80%, 60% to 90%, 60% to 95%, 70% to 80%, 70% to 90%, 70% to 95%, 80% to 90%, 80% to 95%, or 90% to 95% w/w. The concentration of xyloglucan-oligosaccharides in the oligosaccharide component may be 5%, 10%, 20%, 30%, 40%, 50%, 60%, 70%, 80%, 90%, or 95% w/w. The concentration of xyloglucan-oligosaccharides in the oligosaccharide component may be at least 5%, 10%, 20%, 30%, 40%, 50%, 60%, 70%, 80% or 90% w/w. The concentration of xyloglucan-oligosaccharides in the oligosaccharide component may be at most 10%, 20%, 30%, 40%, 50%, 60%, 70%, 80%, 90%, or 95% w/w.

The concentration of xyloglucan-oligosaccharides in a sweetener composition comprising two or more components may be 1% to 70% w/w. The concentration of xyloglucan-oligosaccharides in a sweetener composition comprising two or more components may be at least 1% w/w. The concentration of xyloglucan-oligosaccharides in a sweetener composition comprising two or more components may be at most 70% w/w. The concentration of xyloglucan-oligosaccharides in a sweetener composition comprising two or more components may be 1% to 10%, 1% to 15%, 1% to 20%, 1% to 30%, 1% to 40%, 1% to 50%, 1% to 60%, 1% to 70%, 10% to 15%, 10% to 20%, 10% to 30%, 10% to 40%, 10% to 50%, 10% to 60%, 10% to 70%, 15% to 20%, 15% to 30%, 15% to 40%, 15% to 50%, 15% to 60%, 15% to 70%, 20% to 30%, 20% to 40%, 20% to 50%, 20% to 60%, 20% to 70%, 30% to 40%, 30% to 50%, 30% to 60%, 30% to 70%, 40% to 50%, 40% to 60%, 40% to 70%, 50% to 60%, 50% to 70%, or 60% to 70% w/w. The concentration of xyloglucan-oligosaccharides in a sweetener composition comprising two or more components may be 1%, 10%, 15%, 20%, 30%, 40%, 50%, 60%, or 70% w/w. The concentration of xyloglucan-oligosaccharides in a sweetener composition comprising two or more components may be at least 1%, 10%, 15%, 20%, 30%, 40%, 50% or 60% w/w. The concentration of xyloglucan-oligosaccharides in a sweetener composition comprising two or more components may be at most 10%, 15%, 20%, 30%, 40%, 50%, 60%, or 70% w/w.

In some cases, when the composition of the invention is used in a composition such as a consumable composition or foodstuff, the concentration of xyloglucan-oligosaccharides may be about 0.1%, 0.5%, 1%, 5%, 10%, 15%, 20%, 25%, 30%, 35%, 40%, 45%, or 50% w/w. In some cases, the concentration of xyloglucan-oligosaccharides in a composition may be at least 0.1%, 0.5%, 1%, 5%, 10%, 15%, 20%, 25%, 30%, 35%, 40%, or 45% w/w. In some cases, the concentration of xyloglucan-oligosaccharides in a composition may be at most 5%, 10%, 15%, 20%, 25%, 30%, 35%, 40%, 45%, or 50% w/w.

### Compositions further comprising mixed-linkage glucan-oligosaccharides

In some examples, the oligosaccharide component may further comprise mixed-linkage glucan-oligosaccharides. Mixed-linkage glucan-oligosaccharides may comprise a mixed-linkage glucan-oligosaccharides mixture comprising mixed-linkage glucan-oligosaccharides with degrees of polymerization of from two to five (inclusive).

In some cases, the concentration of mixed-linkage glucan-oligosaccharides with a degree of polymerization of two in the mixed-linkage glucan-oligosaccharide mixture may be from 2% to 30% w/w. The concentration of mixed-linkage glucan-oligosaccharides with a degree of polymerization of two may be at least 2%, 4%, 6%, 8%, 10%, 12%, 15%, 18%, 20%, 25%, or 30% w/w. The concentration of mixed-linkage glucan-oligosaccharides with a degree of polymerization of two may be at most 2%, 4%, 6%, 8%, 10%, 12%, 15%, 18%, 20%, 25%, or 30% w/w.

In some cases, the concentration of mixed-linkage glucan-oligosaccharides with a degree of polymerization of three in a mixed-linkage glucan-oligosaccharide mixture may be from 0.5% to 20% w/w. The concentration of mixed-linkage glucan-oligosaccharides with a degree of polymerization of three may be at least 0.5%, 1%, 2%, 4%, 6%, 8%, 10%, 12%, 15%, 18%, or 20% w/w. The concentration of mixed-linkage glucan-oligosaccharides with a degree of polymerization of three may be in some cases, for instance, up to 0.5%, 1%, 2%, 5%, 10%, or 15% w/w.

In some cases, the concentration of mixed-linkage glucan-oligosaccharides with a degree of polymerization of four in the mixed-linkage glucan-oligosaccharide mixture may be from 0.1% to 20% w/w. The concentration of mixed-linkage glucan-oligosaccharides with a degree of polymerization of four may be at least 0.1%, 0.5%, 1%, 2%, 4%, 6%, 8%, 10%, 12%, 15%, 18%, or 20% w/w. The concentration of mixed-linkage glucan-oligosaccharides with a degree of polymerization of four may be in some cases, for instance, up to 0.1%, 0.5%, 1%, 2%, 5%, 10%, or 15% w/w.

In some cases, the concentration of mixed-linkage glucan-oligosaccharides with a degree of polymerization of five in the mixed-linkage glucan-oligosaccharide mixture may be from 0.1% to 20% w/w. The concentration of mixed-linkage glucan-oligosaccharides with a degree of polymerization of five may be at least 0.1%, 0.5%, 1%, 2%, 4%, 6%, 8%, 10%, 12%, 15%, 18%, or 20% w/w. The concentration of mixed-linkage glucan-oligosaccharides with a degree of polymerization of five may be in some cases, for instance, up to 0.1%, 0.5%, 1%, 2%, 5%, 10%, or 15% w/w.

In some examples, the concentration of mixed-linkage glucan-oligosaccharides in the oligosaccharide component may be 5% to 95% w/w. The concentration of mixed-linkage glucan-oligosaccharides in the oligosaccharide component may be at least 5% w/w. The concentration of mixed-linkage glucan-oligosaccharides in the oligosaccharide component may be at most 95% w/w. The concentration of mixed-linkage glucan-oligosaccharides in the oligosaccharide component may be 5% to 10%, 5% to 20%, 5% to 30%, 5% to 40%, 5% to 50%, 5% to 60%, 5% to 70%, 5% to 80%, 5% to 90%, 5% to 95%, 10% to 20%, 10% to 30%, 10% to 40%, 10% to 50%, 10% to 60%, 10% to 70%, 10% to 80%, 10% to 90%, 10% to 95%, 20% to 30%, 20% to 40%, 20% to 50%, 20% to 60%, 20% to 70%, 20% to 80%, 20% to 90%, 20% to 95%, 30% to 40%, 30% to 50%, 30% to 60%, 30% to 70%, 30% to 80%, 30% to 90%, 30% to 95%, 40% to 50%, 40% to 60%, 40% to 70%, 40% to 80%, 40% to 90%, 40% to 95%, 50% to 60%, 50% to 70%, 50% to 80%, 50% to 90%, 50% to 95%, 60% to 70%, 60% to 80%, 60% to 90%, 60% to 95%, 70% to 80%, 70% to 90%, 70% to 95%, 80% to 90%, 80% to 95%, or 90% to 95% w/w. The concentration of mixed-linkage glucan-oligosaccharides in the oligosaccharide component may be 5%, 10%, 20%, 30%, 40%, 50%, 60%, 70%, 80%, 90%, or 95% w/w. The concentration of mixed-linkage glucan-oligosaccharides in the oligosaccharide component may be at least 5%, 10%, 20%, 30%, 40%, 50%, 60%, 70%, 80% or 90% w/w. The concentration of mixed-linkage glucan-oligosaccharides in the oligosaccharide component may be at most 10%, 20%, 30%, 40%, 50%, 60%, 70%, 80%, 90%, or 95% w/w.

The concentration of mixed-linkage glucan-oligosaccharides in a sweetener composition comprising two or more components may be 1% to 70% w/w. The concentration of mixed-linkage glucan-oligosaccharides in a sweetener composition comprising two or more components may be at least 1% w/w. The concentration of mixed-linkage glucan-oligosaccharides in a sweetener composition comprising two or more components may be at most 70% w/w. The concentration of mixed-linkage glucan-oligosaccharides in a sweetener composition comprising two or more components may be 1% to 10%, 1% to 15%, 1% to 20%, 1% to 30%, 1% to 40%, 1% to 50%, 1% to 60%, 1% to 70%, 10% to 15%, 10% to 20%, 10% to 30%, 10% to 40%, 10% to 50%, 10% to 60%, 10% to 70%, 15% to 20%, 15% to 30%, 15% to 40%, 15% to 50%, 15% to 60%, 15% to 70%, 20% to 30%, 20% to 40%, 20% to 50%, 20% to 60%, 20% to 70%, 30% to 40%, 30% to 50%, 30% to 60%, 30% to 70%, 40% to 50%, 40% to 60%, 40% to 70%, 50% to 60%, 50% to 70%, or 60% to 70% w/w. The concentration of mixed-linkage glucan-oligosaccharides in a sweetener composition comprising two or more components may be 1%, 10%, 15%, 20%, 30%, 40%, 50%, 60%, or 70% w/w. The concentration of mixed-linkage glucan-oligosaccharides in a sweetener composition comprising two or more components may be at least 1%, 10%, 15%, 20%, 30%, 40%, 50% or 60% w/w. The concentration of mixed-linkage glucan-oligosaccharides in a sweetener composition comprising two or more components may be at most 10%, 15%, 20%, 30%, 40%, 50%, 60%, or 70% w/w.

In some cases, when the composition of the invention is used in a composition such as a consumable composition or foodstuff, the concentration of mixed-linkage glucan-oligosaccharides may be about 0.1%, 0.5%, 1%, 5%, 10%, 15%, 20%, 25%, 30%, 35%, 40%, 45%, or 50% w/w. In some cases, the concentration of mixed-linkage glucan-oligosaccharides in a composition may be at least 0.1%, 0.5%, 1%, 5%, 10%, 15%, 20%, 25%, 30%, 35%, 40%, or 45% w/w. In some cases, the concentration of mixed-linkage glucan-oligosaccharides in a composition may be at most 5%, 10%, 15%, 20%, 25%, 30%, 35%, 40%, 45%, or 50% w/w.

### Compositions further comprising chito-oligosaccharides

In some examples, the oligosaccharide component may further comprise chito-oligosaccharides. chito-oligosaccharides may comprise a chito-oligosaccharides mixture comprising chito-oligosaccharides with degrees of polymerization of from two to twelve (inclusive).

In some cases, the concentration of chito-oligosaccharides with a degree of polymerization of two in the chito-oligosaccharide mixture may be from 2% to 80% w/w. The concentration of chito-oligosaccharides with a degree of polymerization of two may be at least 2%, 4%, 6%, 8%, 10%, 12%, 15%, 18%, 20%, 25%, 30%, 40%, 50% or 60% w/w. The concentration of chito-oligosaccharides with a degree of polymerization of two may be in some cases, for instance, up to 35%, 40%, 45%, 50%, 55%, 60%, 65%, 70%, 75%, or 80% w/w.

In some cases, the concentration of chito-oligosaccharides with a degree of polymerization of three in a chito-oligosaccharide mixture may be from 0.5% to 20% w/w. The concentration of chito-oligosaccharides with a degree of polymerization of three may be at least 0.5%, 1%, 2%, 4%, 6%, 8%, 10%, 12%, 15%, 18%, or 20% w/w. The concentration of chito-oligosaccharides with a degree of polymerization of three may be in some cases, for instance, up to 0.5%, 1%, 2%, 5%, 10%, or 15% w/w.

In some cases, the concentration of chito-oligosaccharides with a degree of polymerization of four in the chito-oligosaccharide mixture may be from 0.1% to 20% w/w. The concentration of chito-oligosaccharides with a degree of polymerization of four may be at least 0.1%, 0.5%, 1%, 2%, 4%, 6%, 8%, 10%, 12%, 15%, 18%, or 20% w/w. The concentration of chito-oligosaccharides with a degree of polymerization of four may be in some cases, for instance, up to 0.1%, 0.5%, 1%, 2%, 5%, 10%, or 15% w/w.

In some cases, the concentration of chito-oligosaccharides with a degree of polymerization of five in the chito-oligosaccharide mixture may be from 0.1% to 20% w/w. The concentration of chito-oligosaccharides with a degree of polymerization of five may be at least 0.1%, 0.5%, 1%, 2%, 4%, 6%, 8%, 10%, 12%, 15%, 18%, or 20% w/w. The concentration of chito-oligosaccharides with a degree of polymerization of five may be in some cases, for instance, up to 0.1%, 0.5%, 1%, 2%, 5%, 10%, or 15% w/w.

In some cases, the concentration of chito-oligosaccharides with a degree of polymerization of six in the chito-oligosaccharide mixture may be from 0.1% to 25% w/w. The concentration of chito-oligosaccharides with a degree of polymerization of six may be at least 0.1%, 0.5%, 1%, 2%, 4%, 6%, 8%, 10%, 12%, 15%, 18%, or 20% w/w. The concentration of chito-oligosaccharides with a degree of polymerization of six may be in some cases, for instance, up to 0.5%, 1%, 2%, 5%, 10%, or 15% w/w.

In some cases, the concentration of chito-oligosaccharides with a degree of polymerization of seven in the chito-oligosaccharide mixture may be from 0.1% to 20% w/w. The concentration of chito-oligosaccharides with a degree of polymerization of seven may be at least 0.1%, 0.5%, 1%, 2%, 4%, 6%, 8%, 10%, 12%, 15%, 18%, or 20% w/w. The concentration of chito-oligosaccharides with a degree of polymerization of seven may be in some cases, for instance, up to 0.1%, 0.5%, 1%, 2%, 5%, 10%, or 15% w/w.

In some cases, the concentration of chito-oligosaccharides with a degree of polymerization of eight in a chito-oligosaccharide mixture may be from 0.1% to 15% w/w. The concentration of chito-oligosaccharides with a degree of polymerization of eight may be at least 0.1%, 0.5%, 1%, 2%, 4%, 6%, 8%, 10%, 12%, 15%, 18%, or 20% w/w. The concentration of chito-oligosaccharides with a degree of polymerization of eight may be in some cases, for instance, up to 0.1%, 0.5%, 1%, 2%, 5%, 10%, or 15% w/w.

The concentration of chito-oligosaccharides with a degree of polymerization of nine in a chito-oligosaccharide mixture may be from 0.1% to 15% w/w. The concentration of chito-oligosaccharides with a degree of polymerization of nine may be at least 0.1%, 0.5%, 1%, 2%, 4%, 6%, 8%, 10% or 12% w/w. The concentration of chito-oligosaccharides with a degree of polymerization of nine may be in some cases, for instance, up to 0.1%, 0.5%, 1%, 2%, 5%, 10%, or 15% w/w.

The concentration of chito-oligosaccharides with a degree of polymerization of ten in a chito-oligosaccharide mixture may be from 0.1% to 15% w/w. The concentration of chito-oligosaccharides with a degree of polymerization often may be at least 0.1%, 0.5%, 1%, 2%, 4%, 6%, 8%, 10%, 12%, or 15% w/w. The concentration of chito-oligosaccharides with a degree of polymerization of ten may be in some cases, for instance, up to 0.1%, 0.5%, 1%, 2%, 5%, 10%, or 15% w/w.

The concentration of chito-oligosaccharides with a degree of polymerization of eleven in a chito-oligosaccharide mixture may be from 0.1% to 15% w/w. The concentration of chito-oligosaccharides with a degree of polymerization of eleven may be at least 0.1%, 0.5%, 1%, 2%, 4%, 6%, 8%, 10%, 12% or 15% w/w. The concentration of chito-oligosaccharides with a degree of polymerization of eleven may be in some cases, for instance, up to 0.1%, 0.5%, 1%, 2%, 5%, 10% or 15% w/w.

The concentration of chito-oligosaccharides with a degree of polymerization of twelve in a chito-oligosaccharide mixture may be from 0.1% to 15% w/w. The concentration of chito-oligosaccharides with a degree of polymerization of twelve may be at least 0.1%, 0.5%, 1%, 2%, 4%, 6%, 8%, 10%, 12%, or 15% w/w. The concentration of chito-oligosaccharides with a degree of polymerization of twelve may be in some cases, for instance, up to 0.1%, 0.5%, 1%, 2%, 5%, 10%, or 15% w/w.

In some examples, the concentration of chito-oligosaccharides in the oligosaccharide component may be 5% to 95% w/w. The concentration of chito-oligosaccharides in the oligosaccharide component may be at least 5% w/w. The concentration of chito-oligosaccharides in the oligosaccharide component may be at most 95% w/w. The concentration of chito-oligosaccharides in the oligosaccharide component may be 5% to 10%, 5% to 20%, 5% to 30%, 5% to 40%, 5% to 50%, 5% to 60%, 5% to 70%, 5% to 80%, 5% to 90%, 5% to 95%, 10% to 20%, 10% to 30%, 10% to 40%, 10% to 50%, 10% to 60%, 10% to 70%, 10% to 80%, 10% to 90%, 10% to 95%, 20% to 30%, 20% to 40%, 20% to 50%, 20% to 60%, 20% to 70%, 20% to 80%, 20% to 90%, 20% to 95%, 30% to 40%, 30% to 50%, 30% to 60%, 30% to 70%, 30% to 80%, 30% to 90%, 30% to 95%, 40% to 50%, 40% to 60%, 40% to 70%, 40% to 80%, 40% to 90%, 40% to 95%, 50% to 60%, 50% to 70%, 50% to 80%, 50% to 90%, 50% to 95%, 60% to 70%, 60% to 80%, 60% to 90%, 60% to 95%, 70% to 80%, 70% to 90%, 70% to 95%, 80% to 90%, 80% to 95%, or 90% to 95% w/w. The concentration of chito-oligosaccharides in the oligosaccharide component may be 5%, 10%, 20%, 30%, 40%, 50%, 60%, 70%, 80%, 90%, or 95% w/w. The concentration of chito-oligosaccharides in the oligosaccharide component may be at least 5%, 10%, 20%, 30%, 40%, 50%, 60%, 70%, 80% or 90% w/w. The concentration of chito-oligosaccharides in the oligosaccharide component may be at most 10%, 20%, 30%, 40%, 50%, 60%, 70%, 80%, 90%, or 95% w/w.

The concentration of chito-oligosaccharides in a sweetener composition comprising two or more components may be 1% to 70% w/w. The concentration of chito-oligosaccharides in a sweetener composition comprising two or more components may be at least 1% w/w. The concentration of chito-oligosaccharides in a sweetener composition comprising two or more components may be at most 70% w/w. The concentration of chito-oligosaccharides in a sweetener composition comprising two or more components may be 1% to 10%, 1% to 15%, 1% to 20%, 1% to 30%, 1% to 40%, 1% to 50%, 1% to 60%, 1% to 70%, 10% to 15%, 10% to 20%, 10% to 30%, 10% to 40%, 10% to 50%, 10% to 60%, 10% to 70%, 15% to 20%, 15% to 30%, 15% to 40%, 15% to 50%, 15% to 60%, 15% to 70%, 20% to 30%, 20% to 40%, 20% to 50%, 20% to 60%, 20% to 70%, 30% to 40%, 30% to 50%, 30% to 60%, 30% to 70%, 40% to 50%, 40% to 60%, 40% to 70%, 50% to 60%, 50% to 70%, or 60% to 70% w/w. The concentration of chito-oligosaccharides in a sweetener composition comprising two or more components may be 1%, 10%, 15%, 20%, 30%, 40%, 50%, 60%, or 70% w/w. The concentration of chito-oligosaccharides in a sweetener composition comprising two or more components may be at least 1%, 10%, 15%, 20%, 30%, 40%, 50% or 60% w/w. The concentration of chito-oligosaccharides in a sweetener composition comprising two or more components may be at most 10%, 15%, 20%, 30%, 40%, 50%, 60%, or 70% w/w.

In some cases, when the composition of the invention is used in a composition such as a consumable composition or foodstuff, the concentration of chito-oligosaccharides may be about 0.1%, 0.5%, 1%, 5%, 10%, 15%, 20%, 25%, 30%, 35%, 40%, 45%, or 50% w/w. In some cases, the concentration of chito-oligosaccharides in a composition may be at least 0.1%, 0.5%, 1%, 5%, 10%, 15%, 20%, 25%, 30%, 35%, 40%, or 45% w/w. In some cases, the concentration of chito-oligosaccharides in a composition may be at most 5%, 10%, 15%, 20%, 25%, 30%, 35%, 40%, 45%, or 50% w/w.

The composition comprises oligosaccharides. In some examples, the composition can comprise at least 5%, at least 7%, at least 8%, at least 10%, at least 15%, at least 18%, at least 20%, at least 22%, at least 25%, at least 28%, at least 30%, at least 32%, at least 35%, at least 40%, at least 42%, at least 45%, at least 48%, at least 50%, at least 55%, at least 58%, at least 60%, at least 63%, at least 65%, at least 70% oligosaccharides by dry weight of oligosaccharides.

The oligosaccharide component comprises cello-oligosaccharides. The cello-oligosaccharides may comprise at least 5%, 10%, 15%, 20%, 25%, 30%, or 35% by dry weight of the oligosaccharide component. The oligosaccharide component comprises xylo-oligosaccharides. The xylo-oligosaccharides may comprise at least 5%, 10%, 15%, 20%, 25%, 30%, or 35% by dry weight of the oligosaccharide component. The oligosaccharide component can further comprise mixed-linkage glucan oligosaccharides. The xylo-oligosaccharides may comprise at least 5%, 10%, 15%, 20%, 25%, 30%, or 35% by dry weight of the oligosaccharide component. The oligosaccharide component can further comprise mixed-linkage glucan oligosaccharides. The xylo-oligosaccharides may comprise at least 5%, 10%, 15%, 20%, 25%, 30%, or 35% by dry weight of the oligosaccharide component. The oligosaccharide component can further comprise manno-oligosaccharides. The manno-oligosaccharides may comprise at least 5%, 10%, 15%, 20%, 25%, 30%, or 35% by dry weight of the oligosaccharide component.

### Compositions further comprising polysaccharides

In some examples, the oligosaccharide component may further comprise a polysaccharide and/or a polysaccharide derivative. The polysaccharide may be a cellulosic polysaccharide, such as cellulose or a hemicellulosic polysaccharide, such as xylan. In some examples, polysaccharide may be cellulose derivative, such as carboxymethylcellulose. The oligosaccharide component may comprise a polysaccharide aggregate, a lignocellulosic material, or combinations thereof. the ratio in the combination may be from 1:100 to 1:1 polysaccharide/polysaccharide derivative/polysaccharide aggregate: oligosaccharide, for example, from 1:90 to 1:2, from 1:80 to 1:3, from 1:70 to 1:4, or from 1:60 to 1:5. As such, the ratio between the first oligosaccharide, the second oligosaccharide, and the polysaccharide may be from 2:2:1 to 30:30:1, e.g., about 3:3:1.

In some cases, a cellulosic polysaccharide may be included, such as cellulose, or a cellulosic derivative, such as carboxymethylcellulose. An undigested or partially digested lignocellulosic material may be included. Lignocellulosic material may result from an enzymatic reaction. The enzymatic reaction may be an enzymatic reaction performed to produce oligosaccharides from biomass.

In some examples, the composition comprises at most 30%, 20%, 10%, 5%, or lesser amounts of polysaccharides and/or polysaccharide derivatives.

The oligosaccharide component may comprise a combination of polysaccharides and oligosaccharides. The oligosaccharide component may comprise one or more of any type of polysaccharide. For example, the oligosaccharide component may comprise a compound selected from a polysaccharide, a cellulosic polysaccharide, cellulose, a hemicellulosic polysaccharide, xylan, a polysaccharide derivative, a cellulose derivative, carboxymethylcellulose, a polysaccharide aggregate, a lignocellulosic material, or any combination thereof.

Polysaccharides may have different sources. Polysaccharides may be present in the oligosaccharide component as a side-product of a reaction performed to produce the oligosaccharides of the oligosaccharide component. In some examples, the oligosaccharides of the oligosaccharide component may be a product of digesting plant biomass. Plant biomass may be digested completely. In some cases, plant biomass may be digested partially, leaving some undigested plant biomass behind. Undigested plant biomass resulting from such process may comprise polysaccharides. Such polysaccharides may comprise cellulose.

The concentration of undigested biomass in the oligosaccharide component may be from 1% to 50% w/w. For example, the concentration of undigested biomass in the oligosaccharide component may be from 1% to 5%, 1% to 10%, 1% to 15%, 1% to 20%, 1% to 25%, 1% to 30%, 1% to 35%, 1% to 40%, 1% to 45%, 1% to 50%, 5% to 10%, 5% to 15%, 5% to 20%, 5% to 25%, 5% to 30%, 5% to 35%, 5% to 40%, 5% to 45%, 5% to 50%, 10% to 15%, 10% to 20%, 10% to 25%, 10% to 30%, 10% to 35%, 10% to 40%, 10% to 45%, 10% to 50%, 15% to 20%, 15% to 25%, 15% to 30%, 15% to 35%, 15% to 40%, 15% to 45%, 15% to 50%, 20% to 25%, 20% to 30%, 20% to 35%, 20% to 40%, 20% to 45%, 20% to 50%, 25% to 30%, 25% to 35%, 25% to 40%, 25% to 45%, 25% to 50%, 30% to 35%, 30% to 40%, 30% to 45%, 30% to 50%, 35% to 40%, 35% to 45%, 35% to 50%, 40% to 45%, 40% to 50%, or 45% to 50% w/w. In some cases, the concentration of undigested biomass in the oligosaccharide component may be about 1%, 5%, 10%, 15%, 20%, 25%, 30%, 35%, 40%, 45%, or 50% w/w. In some cases, the concentration of undigested biomass in the oligosaccharide component may be at least 1%, 5%, 10%, 15%, 20%, 25%, 30%, 35%, 40%, or 45% w/w. In some cases, the concentration of undigested biomass in the oligosaccharide component may be at most 5%, 10%, 15%, 20%, 25%, 30%, 35%, 40%, 45%, or 50% w/w.

The polysaccharides in the undigested biomass may comprise lignin, polyphenol, cellulose, lignocellulose, or other polysaccharides. In some examples, the composition may comprise a phenolic compound, a lignin, a portion of a lignin, a product of lignin breakdown, ferulic acid, a ferulic acid derivative, and/or combinations thereof.

In other examples, polysaccharides may be separately added to the oligosaccharide component of the composition. The addition of polysaccharides to the oligosaccharide component can be done to improve the gastrointestinal tolerance of the oligosaccharide component. The oligosaccharide component may comprise oligosaccharides, and in some cases, oligosaccharide consumption can cause gastrointestinal distress, including diarrhea, discomfort, and/or bloating. The oligosaccharide component of the composition described herein may have an improved gastrointestinal tolerance such as, less or no discomfort, bloating, diarrhea, and/or gastrointestinal distress as compared to a saccharide composition available commercially or a saccharide composition comprising primarily monosaccharides and/or disaccharides. In some examples, these improved characteristics of the oligosaccharide component may be attributed to the existence of polysaccharides in the oligosaccharide component.

The oligosaccharide component may have polysaccharides of different sources. Part of the polysaccharide content of the oligosaccharide component may be a side product of the reactions performed to produce the oligosaccharides, while part of the polysaccharide content of the oligosaccharide component may be added to the oligosaccharides after they are produced.

In some examples, the oligosaccharide component may comprise polysaccharides and two or more oligosaccharides. The composition may comprise a polysaccharide and two types of oligosaccharides. The composition may comprise a polysaccharide and three types of oligosaccharides. The composition may comprise a polysaccharide and four types of oligosaccharides. The composition may comprise a polysaccharide and five types of oligosaccharides. The oligosaccharides are xylo-oligosaccharides and cello-oligosaccharides, and optionally may be manno-oligosaccharides, xyloglucan-oligosaccharides, chito-oligosaccharides, or any other suitable oligosaccharides, e.g., as described herein.

The oligosaccharide component may comprise from 5% to 50% polysaccharides w/w, such as in the type of undigested biomass, and from 5% to 95% oligosaccharides w/w. The polysaccharide portion of the oligosaccharide component may be at least 5%, 10%, 15%, 20%, 25%, 30%, 35%, 40%, 45%, or 50% w/w of the oligosaccharide component. The polysaccharide portion of the oligosaccharide component may be at most 10%, 15%, 20%, 25%, 30%, 35%, 40%, 45%, or 50% w/w of the oligosaccharide component. In such cases, the oligosaccharide portion of the oligosaccharide component may be at least 5%, 10%, 15%, 20%, 25%, 30%, 35%, 40%, 45%, 50%, 55%, 60%, 65%, 70%, 75%, 80%, 85%, 90%, or 95% w/w of the oligosaccharide component.

The oligosaccharide component may comprise about 5% polysaccharides w/w, such as in the type of undigested biomass, and from 5% to 95% oligosaccharides w/w. In such cases, the oligosaccharide portion of the composition may be at least 5%, 10%, 15%, 20%, 25%, 30%, 35%, 40%, 45%, 50%, 55%, 60%, 65%, 70%, 75%, 80%, 85%, 90% or 95% w/w of the oligosaccharide component. In such cases, the oligosaccharide portion of the composition may be at most 10%, 15%, 20%, 25%, 30%, 35%, 40%, 45%, 50%, 55%, 60%, 65%, 70%, 75%, 80%, 85%, 90%, or 95% w/w of the oligosaccharide component. For example, the oligosaccharide component may comprise 5% undigested biomass and 50% oligosaccharide mixture w/w as described elsewhere herein.

The oligosaccharide component may comprise about 7% polysaccharides w/w, such as in the type of undigested biomass and from 5% to 93% oligosaccharides w/w. The oligosaccharide content of the oligosaccharide component may be at least 5%, 10%, 15%, 20%, 25%, 30%, 35%, 40%, 45%, 50%, 55%, 60%, 65%, 70%, 75%, 80%, 85%, 90%, or 93% w/w of the oligosaccharide component in such compositions. For example, the oligosaccharide component may comprise 7% undigested biomass and 50% oligosaccharide mixture w/w as described elsewhere herein.

The oligosaccharide component may comprise about 10% polysaccharides w/w, such as in the type of undigested biomass and from 5% to about 90% oligosaccharides w/w of the oligosaccharide component. The oligosaccharide content of the oligosaccharide component may be at least 5%, 10%, 15%, 20%, 25%, 30%, 35%, 40%, 45%, 50%, 55%, 60%, 65%, 70%, 75%, 80%, 85%, or 90% w/w of the oligosaccharide component of such compositions. For example, the oligosaccharide component may comprise 10% undigested biomass and 50% oligosaccharide mixture w/w as described elsewhere herein.

The oligosaccharide component may comprise about 12% polysaccharides w/w, such as in the type of undigested biomass and from 5% to about 95% oligosaccharides w/w of the oligosaccharide component. The oligosaccharide content of the oligosaccharide component may be at least 5%, 10%, 15%, 20%, 25%, 30%, 35%, 40%, 45%, 50%, 55%, 60%, 65%, 70%, 75%, 80%, 85%, or 88% w/w of the oligosaccharide component in such compositions. For example, the oligosaccharide component may comprise 12% undigested biomass and 50% oligosaccharide mixture w/w as described elsewhere herein.

The oligosaccharide component may comprise about 15% polysaccharides w/w, such as in the type of undigested biomass and from 5% to about 85% oligosaccharides w/w. The oligosaccharide content of the oligosaccharide component may be at least 5%, 10%, 15%, 20%, 25%, 30%, 35%, 40%, 45%, 50%, 55%, 60%, 65%, 70%, 75%, 80%, or 85% w/w of the oligosaccharide component of such mixtures. For example, the first component may comprise 15% undigested biomass and 50% oligosaccharide mixture w/w as described elsewhere herein.

The oligosaccharide component may comprise about 20% polysaccharides w/w, such as in the type of undigested biomass and from 5% to about 80% oligosaccharides w/w. The oligosaccharide content of the oligosaccharide component may be at least 5%, 10%, 15%, 20%, 25%, 30%, 35%, 40%, 45%, 50%, 55%, 60%, 65%, 70%, 75%, or 80% w/w of the oligosaccharide component in such compositions. For example, the oligosaccharide component may comprise 20% undigested biomass and 50% oligosaccharide mixture w/w as described elsewhere herein.

The oligosaccharide component may comprise about 25% polysaccharides w/w, such as in the type of undigested biomass and from 5% to 75% oligosaccharides w/w. The oligosaccharide content of the oligosaccharide component may be at least 5%, 10%, 15%, 20%, 25%, 30%, 35%, 40%, 45%, 50%, 55%, 60%, 65%, 70%, or 75% w/w of the oligosaccharide component in such compositions. For example, the oligosaccharide component may comprise 25% undigested biomass and 50% oligosaccharide mixture w/w as described elsewhere herein.

The oligosaccharide component may comprise about 30% polysaccharides w/w, such as in the type of undigested biomass and from 5% to 70% oligosaccharides w/w. The oligosaccharide content of the oligosaccharide component may be at least 5%, 10%, 15%, 20%, 25%, 30%, 35%, 40%, 45%, 50%, 55%, 60%, 65%, or 70% w/w of the oligosaccharide component in such compositions. For example, the oligosaccharide component may comprise 30% undigested biomass and 50% oligosaccharide mixture w/w as described elsewhere herein.

The oligosaccharide component may comprise about 40% polysaccharides w/w, such as in the type of undigested biomass and from 5% to 60% oligosaccharides w/w. The oligosaccharide content of the oligosaccharide component may be at least 5%, 10%, 15%, 20%, 25%, 30%, 35%, 40%, 45%, 50%, 55%, or 60% w/w of the oligosaccharide component in such compositions. For instance, a composition may comprise 40% undigested biomass and 50% oligosaccharide mixture w/w as described elsewhere herein.

The oligosaccharide component may comprise about 50% polysaccharides w/w, such as in the type of undigested biomass and from 5% to 50% oligosaccharides w/w. The oligosaccharide content of the oligosaccharide component may be at least 5%, 10%, 15%, 20%, 25%, 30%, 35%, 40%, 45%, or 50% w/w of the oligosaccharide component in such compositions. For example, the oligosaccharide component may comprise 50% undigested biomass and 50% oligosaccharide mixture w/w as described elsewhere herein.

The oligosaccharide component may comprise other elements such as metals. The oligosaccharide component may be free of metals. The metals may be Al, As, B, Ba, Be, Ca, Cd, Co, Cr, Cu, Fe, Hg, K, Li, Mg, Mn, Mo, Na, Ni, P, Pb, S, Sb, Se, Si, Sn, Sr, Ti, Tl, V, and/or Zn. The oligosaccharide component may comprise less than 0.5, 0.1, 0.05, or 0.01 ppm of metals.

In some examples, the oligosaccharide component comprises saccharides. For example, the oligosaccharide component may comprise at least 50%, 60%, 70%, 80%, 90%, 95%, 99%, 99.5%, or more amounts by dry weight of saccharides. In some cases, the oligosaccharide component may comprise at most about 99.9%, 99.5%, 99.0%, 98.5%, 98%, 97%, 96%, 95%, 94%, 90%, 80%, 70%, 60%, or less amounts of saccharides on a dry weight basis. In some cases, the oligosaccharide component may consist essentially of saccharides.

The composition comprises a high-intensity sweetener. The high-intensity sweetener may comprise one or more high-intensity sweeteners and/or one or more sugar(s). Examples of high-intensity sweeteners may comprise acesulfame K, advantame, aspartame, clyclamate, glycyrrhizin, monk fruit extract, neohesperidin dihydrochalcone, neotame, saccharin, stevia extract, sucralose, thaumatin, or any combination thereof. The high-intensity sweetener is a high-intensity sweetener. A "high-intensity sweetener," as used herein, generally comprises a sweetener which is more than 100 times sweeter than table sugar (sucrose). The high-intensity sweetener can comprise a natural high-intensity sweetener, an artificial high-intensity sweetener, a plant extract, a protein, a glycoside, a mogroside, a protein, such as a sweet protein, or any combination thereof. In some examples, the high-intensity sweetener can comprise rebaudloside A and/or stevioside.

In some cases, the oligosaccharide mixture in a sweetener composition comprising a high-intensity sweetener may improve the heat tolerance of the high-intensity sweetener. In some cases, a composition comprising a high-intensity sweetener and an oligosaccharide mixture may have a comparable heat tolerance to a composition without the oligosaccharide mixture. The heat tolerance of a composition comprising an oligosaccharide mixture and a high-intensity sweetener may be better than a composition without the oligosaccharide mixture.

The weight/weight ratio of the high-intensity sweetener to the total sweetener composition on a dry basis can comprise from 1:250 to 1:50, from 1:200 to 1:100. For example, the weight/weight ratio of the high-intensity sweetener to the total composition on a dry basis can be 1:50, about 1:60, about 1:70, about 1:80, about 1:90, about 1:100, about 1:110, about 1:120, about 1:130, about 1:140, about 1:150, about 1:160, about 1:170, about 1:180, about 1:200, about 1:210, about 1:220, about 1:230, about 1:240, about 1:250, about 1:300, or other suitable ratios.

In some cases, a ratio of high-intensity sweetener to the oligosaccharide mixture in a sweetener composition may be anywhere from 1:1000 to 1:50. In some cases, a ratio of high-intensity sweetener to the oligosaccharide mixture in a sweetener composition may be anywhere from 1:500 to 1:50. In some cases, a ratio of high-intensity sweetener to the oligosaccharide mixture in a sweetener composition may be anywhere from 1:100 to 1:50.

In some cases, a sweetener composition may comprise at least 0.01% w/w of a high-intensity sweetener. In some cases, a sweetener composition may comprise 0.01% to 0.05%, 0.01% to 0.1%, 0.01% to 0.5%, 0.01% to 1%, 0.01% to 2%, 0.05% to 0.1%, 0.05% to 0.5%, 0.05% to 1%, 0.05% to 2%, 0.1% to 0.5%, 0.1% to 1%, 0.1% to 2%, 0.5% to 1%, 0.5% to 2%, or 1% to 2% w/w of a high-intensity sweetener. In some cases, a sweetener composition may comprise 0.01%, 0.05%, 0.1%, 0.5%, 1%, or 2% w/w of a high-intensity sweetener. In some cases, a sweetener composition may comprise at least 0.01%, 0.05%, 0.1%, 0.5%, or 1% w/w of a high-intensity sweetener. In some cases, a sweetener composition may comprise at most 0.05%, 0.1%, 0.5%, 1%, or 2% w/w of a high-intensity sweetener.

Weight ratios of the high-intensity sweetener to the composition (total weight of composition) can vary. Examples of the weight/weight ratio of the high-intensity sweetener to the total composition on a dry basis can comprise from 0.3% to 4%, 0.4% to 2%, or from 0.5% to 1%. For example, the weight/weight percentage of the high-intensity sweetener to the total composition on a dry basis can be about 0.4%, 2%, about 1.7%, about 1.4%, about 1.2%, about 1.1%, about 1%, about 0.9%, about 0.8%, about 0.7%, about 0.7%, about 0.62%, about 0.58%, about 0.55%, about 0.5%, about 0.48%, about 0.45%, about 0.43%, about 0.42%, about 0.40%, or about 0.33%.

### The composition

The composition can further comprise saccharides, polysaccharides, maltodextrin, sugars, impurities, or other components as described anywhere herein.

In some examples, the composition can comprise at least 5%, at least 7%, at least 8%, at least 10%, at least 15%, at least 18%, at least 20%, at least 22%, at least 25%, at least 28%, at least 30%, at least 32%, at least 35%, at least 40%, at least 42%, at least 45%, at least 48%, at least 50%, at least 55%, at least 58%, at least 60%, at least 63%, at least 65%, or at least 70% oligosaccharides by dry weight of oligosaccharides.

Oligosaccharides may comprise one or more oligosaccharides. The one or more oligosaccharides may comprise at least 5%, at least 7%, at least 8%, at least 10%, at least 15%, at least 18%, at least 20%, at least 22%, at least 25%, at least 28%, at least 30%, at least 32%, at least 35%, at least 40%, at least 42%, at least 45%, at least 48%, at least 50%, at least 55%, at least 58%, at least 60%, at least 63%, at least 65%, at least 70% of the weight of the total composition on a dry basis.

The at least two types of oligosaccharides may comprise at least 5%, at least 7%, at least 8%, at least 10%, at least 15%, at least 18%, at least 20%, at least 22%, at least 25%, at least 28%, at least 30%, at least 32%, at least 35%, at least 40%, at least 42%, at least 45%, at least 48%, at least 50%, at least 55%, at least 58%, at least 60%, at least 63%, at least 65%, at least 70% of the weight of the total composition on a dry basis.

In some examples, the two or more oligosaccharides may form at most 99.9%, at most 99.8%, at most 99.7%, at most 99.6%, at most 99.5%, at most 99.4%, at most 99.3%, at most 99.2%, at most 99.1%, at most 99.0%, at most 98.9%, at most 98.8%, at most 98.7%, at most 98.6%, at most 98.5%, at most 98.84%, at most 98.3%, at most 98.2%, at most 98.1%, at most 98.0%, at most 98%, at most 97.9%, at most 97.8%, at most 97.7%, at most 97.6%, at most 97.5%, at most 97.4%, at most 97.3%, at most 97.2%, at most 97.1%, at most 97%, at most 96%, at most 95%, at most 94%, at most 93%, at most 92%, at most 91%, at most 90%, at most 85%, at most 80%, at most 75%, at most 70% of the weight of the total composition on a dry basis.

The cello-oligosaccharides may comprise at least 5%, 10%, 15%, 20%, 25%, 30%, or 35% by dry weight of the oligosaccharide component. The xylo-oligosaccharides may comprise at least 5%, 10%, 15%, 20%, 25%, 30%, or 35% by dry weight of the oligosaccharide component. The oligosaccharide component can further comprise mixed-linkage glucan oligosaccharides. The xylo-oligosaccharides may comprise at least 5%, 10%, 15%, 20%, 25%, 30%, or 35% by dry weight of the oligosaccharide component. The oligosaccharide component can further comprise mixed-linkage glucan oligosaccharides. The xylo-oligosaccharides may comprise at least 5%, 10%, 15%, 20%, 25%, 30%, or 35% by dry weight of the oligosaccharide component. The oligosaccharide component can further comprise manno-oligosaccharides. The manno-oligosaccharides may comprise at least 5%, 10%, 15%, 20%, 25%, 30%, or 35% by dry weight of the oligosaccharide component.

In some examples, the oligosaccharide component optionally further comprises the manno-oligosaccharides. The oligosaccharide component may have different iterations or combinations of oligosaccharides as described in the present disclosure.

The composition can also optionally further comprise a sugar. For example, the composition can be a mixture of cello-oligosaccharides and xylo-oligosaccharides in addition to one or more sugar(s) and/or one or more high-intensity sweeteners. For example, the composition can comprise the cello-oligosaccharides, xylo-oligosaccharides, and high-intensity sweeteners described anywhere herein, and/or at the ratios and/or percentages described anywhere herein. In other examples, the composition may optionally further comprise manno-oligosaccharides, in addition to a sugar and/or a high-intensity sweetener, as described anywhere herein.

In an example, the sweetener composition may comprise from 0.01% to 10% of a high-intensity sweetener, such as stevia extract. In this example, the composition may comprise from 90% to about 99.5% oligosaccharide component. The cello-oligosaccharides may be a mixture of cello-oligosaccharides with different degrees of polymerization as described herein. Xylo-oligosaccharides may be a mixture of xylo-oligosaccharides with different degrees of polymerization as described herein.

### Compositions comprising monosaccharides and disaccharides

The sweetener composition can further comprise monosaccharides. Monosaccharides can comprise glucose, fructose, galactose, other monosaccharides, and/or any combination thereof. Varying levels of different monosaccharides may be present in the sweetener composition. In some cases, the amounts of monosaccharides in the sweetener composition may be minimized. In some cases, the sweetener composition may be substantially free of monosaccharides. Substantially free, as described herein means that the composition may have less than 5%, 3%, 2%, 1%, or 0.5% w/w monosaccharides.

In some examples, the sweetener composition can comprise at most 40%, 35%, 30%, 25% 20%, 15%, 10%, 9%, 8%, 7%, 6%, 5%, 4%, 3%, 2%, 1%, 0.8%, 0.7%, 0.6%, 0.5%, 0.4%, or less amount of monosaccharide by weight of the sweetener composition on a dry basis. In some examples, the sweetener composition comprises less than 5% of monosaccharide by weight of the sweetener composition on a dry basis. In some examples, the sweetener composition comprises less than 10% of monosaccharide by weight of the sweetener composition on a dry basis. In some examples, the sweetener composition comprises less than 20% of monosaccharide by weight of the sweetener composition on a dry basis. In some examples, the sweetener composition comprises less than 40% of monosaccharide by weight of the sweetener composition on a dry basis. In some examples, the sweetener composition can be substantially free of monosaccharides. In some examples, zero to minimal amounts of monosaccharides may be present in the sweetener composition. Alternatively, in some examples, average amounts of monosaccharides or in some examples, high levels of monosaccharides may be present in the sweetener composition.

The sweetener composition can further comprise disaccharides. Disaccharides can comprise sucrose, lactose, maltose, other disaccharides, and/or any combinations thereof. Varying levels of different disaccharides may be present in the sweetener composition. In some cases, the amounts of disaccharides in the sweetener composition may be minimized. In some cases, the sweetener composition may be substantially free of disaccharides.

In some examples, the sweetener composition can comprise at most 70%, 60%, 55%, 50%, 45%, 40%, 35%, 30%, 25%, 20%, 15%, 10%, 9%, 8%, 7%, 6%, 5%, or less amounts of disaccharides by weight of the sweetener composition on a dry basis. In some examples, the sweetener composition comprises less than 5% of disaccharide by weight of the sweetener composition on a dry basis. In some examples, the sweetener composition comprises less than 10% of disaccharide by weight of the sweetener composition on a dry basis. In some examples, the sweetener composition comprises less than 20% of disaccharide by weight of the sweetener composition on a dry basis. In some examples, the sweetener composition comprises less than 40% of disaccharide by weight of the sweetener composition on a dry basis. In some examples, the sweetener composition can be substantially free of disaccharides. In some examples, zero to minimal amounts of disaccharides may be present in the sweetener composition. Alternatively, in some examples, average amounts of disaccharides or in some examples, high levels of disaccharides may be present in the sweetener composition.

In some examples, the composition can further comprise maltodextrin. In some examples, the composition can comprise less than 20%, and in further embodiments at most 15%, 10%, 9%, 8%, 7%, 6%, 5%, 4%, 3%, 2%, 1%, 0.8%, 0.7%, 0.6%, 0.5%, 0.4%, or less amounts of maltodextrin by weight of the composition on a dry basis. In some examples, the composition can be substantially free of maltodextrin. In some examples, zero to minimal amounts of maltodextrin may be present in the composition. Alternatively, in some examples, average amounts of maltodextrin, or in some examples, high levels of maltodextrin may be present in the composition.

In some examples, the composition can further comprise inulin. In some examples, the composition can comprise an amount of inulin by weight of the composition on a dry basis that is less than the amount of the xylo-oligosaccharides or the amount of the cello-oligosaccharides. In some examples, the composition can be substantially free of inulin. In some examples, zero to minimal amounts of inulin may be present in the composition. Alternatively, in some examples, average amounts of inulin, or in some examples, high levels of inulin may be present in the composition.

In some examples, the composition can further comprise sugar alcohols (such as sorbitol, glucitol, xylitol, mannitol, maltitol, lactitol, erythritol, or other sugar alcohols). In some examples, the composition can comprise an amount of sugar alcohols by weight of the composition on a dry basis that is less than the amount of the xylo-oligosaccharides or the amount of the cello-oligosaccharides. In some examples, the composition can be substantially free of sugar alcohols. In some examples, zero to minimal amounts of sugar alcohols may be present in the composition. Alternatively, in some examples, average amounts of sugar alcohols, or in some examples, high levels of sugar alcohols may be present in the composition.

In some examples, the composition can further comprise rare sugars (such as allulose, tagatose, psicose, or other rare sugars). In some examples, the composition can comprise an amount of rare sugars by weight of the composition on a dry basis that is less than the amount of the xylo-oligosaccharides or the amount of the cello-oligosaccharides. In some examples, the composition can be substantially free of rare sugars. In some examples, zero to minimal amounts of rare sugars may be present in the composition.

### Composition properties

The average sweetness level of the composition comprising the oligosaccharide component and the high-intensity sweetener can be measured using different approaches and/or protocols. For example, an average level of sweetness can be characterized as sweetness perception by a human subject. An average level of sweetness can be measured as sweetness perception by a panel of human subjects. The average bitterness can be characterized as a bitterness perception by a human subject. The average bitterness can be measured as a bitterness perception by a panel of human subjects. Sweetness and bitterness can depend on several factors, such as, for example, the concentration of the sweetener, temperature, pH, type of medium, and other factors.

Sweetness may be characterized as relative sweetness versus table sugar or sucrose (sucrose=1). Relative sweetness may depend on several factors, such as, for example, the concentration of the sweetener, temperature, pH, type of medium, the concentration of the sucrose solution used as a comparison, and other factors.

In an embodiment, an average sweetness level per unit weight of the high-intensity sweetener is greater than an average sweetness level per unit weight of the oligosaccharide component. For example, an average sweetness level per unit weight of the high-intensity sweetener can be at least 5 times, at least 10 times, at least 20 times, at least 50 times, at least 70 times, at least 90 times, at least 100 times, at least 150 times, at least 200 times, at least 210 times, at least 220 times, at least 230 times, at least 250 times, at least 300 times, at least 310 times, at least 320 times, at least 350 times, at least 400 times greater than an average sweetness level per unit weight of the oligosaccharide component, or more.

The relative sweetness level of the high-intensity sweetener versus sucrose can be from 20:1 to 20000:1. The relative sweetness level of the high-intensity sweetener versus sucrose can be from 30:1 to 600:1. For example, the relative sweetness level of the high-intensity sweetener versus sucrose can be about 20:1, 30:1, 40:1, 50:1, 60:1, 70:1, 80:1, 90:1, 100:1, 110:1, 120:1, 130:1, 140:1, 150:1, 160:1, 170:1, 180:1, 190:1, 200:1, 210:1, 220:1, 230:1, 240:1, 250:1, 260:1, 270:1, 280:1, 290:1, 300:1, 350:1, 400:1, 450:1, 500:1, 550:1, 600:1, 650:1, 700:1, 800:1, 900:1, 1000:1, 1500:1, 2000:1, 2500:1, 3000:1, 4000:1, 20000:1, or more. The high-intensity sweetener may be capable of providing a richer, fuller, and/or more intense sweetness taste in the composition.

The oligosaccharide component may comprise a minimal, low, and/or negligible level of bitter taste, undertone, and/or aftertaste. In some examples, the oligosaccharide component may comprise substantially no bitterness. In certain embodiments, the oligosaccharide component may not comprise a significant bitter taste, undertone, and/or aftertaste. The oligosaccharide component may be capable of masking a bitter taste of the high-intensity sweetener and/or the composition it is used in.

In some cases, the high-intensity sweetener may comprise a bitter taste, undertone, and/or aftertaste. The bitter taste, undertone, and/or aftertaste may be unfavorable. In other examples, the high-intensity sweetener may not comprise a bitterness taste or aftertaste. In some examples, the high-intensity sweetener may comprise a low level of bitterness taste or aftertaste. In some examples, the high-intensity sweetener may comprise a medium or high level of bitterness taste and/or aftertaste. A bitter taste, undertone, and/or aftertaste may be unfavorable.

The oligosaccharide component may be capable of decreasing and/or masking an average bitterness level of the high-intensity sweetener and/or the composition and/or the foodstuff in which the composition is used. The average bitterness can be characterized as a bitterness perception by a human subject. The average bitterness can be characterized as a bitterness perception by a panel of human subjects.

The composition may be rich in sweetness, low in bitterness or substantially free of bitterness, and capable of providing a desired texture in finished products such as, for example, baked goods.

In some cases, the compositions described herein may be used as sweetener compositions. Sweetener compositions may be used by themselves or as an ingredient in a finished product. The compositions described herein may provide about the same level of sweetness or greater sweetness than an identical amount, a substantially identical amount, or comparable amount of a control composition wherein the control composition comprises primarily monosaccharides and/or disaccharides. The compositions described herein may be used to replace the control composition as the sweetener in a finished product. In some cases, the average sweetness per unit weight of a composition may be at least 5%, 10%, 15%, 20%, 30%, 40%, 50%, 70%, 80%, 90%, or 100% more than an identical amount, a substantially identical amount, or comparable amount of the control composition.

The compositions described herein may provide a comparable flavor profile or more desirable flavor profile compared to an identical amount, a substantially identical amount, or comparable amount of a control composition comprising primarily monosaccharides and/or disaccharides. The compositions described herein may be used to replace the control composition as a flavor enhancer in a finished product. Flavor may be a flavor perception by a human subject. Flavor may be characterized by surveying a panel of human subjects.

The compositions described herein may comprise a oligosaccharide component and a high-intensity sweetener. In some cases, the high-intensity sweetener may be sweeter in taste compared to the oligosaccharide component. A finished product comprising a given amount of a composition comprising both the oligosaccharide component and the high-intensity sweetener may be sweeter than a composition comprising an identical amount, a substantially identical amount, or comparable amount of the oligosaccharide component only. A finished product comprising a given amount of a composition comprising both the oligosaccharide component and the high-intensity sweetener may be reported by a panel of subjects to be sweeter, be more favorable, have a better texture, and/or have less bitterness compared to a finished product comprising a composition comprising an identical amount, a substantially identical amount, or comparable amount of the oligosaccharide component only.

The compositions described herein can comprise a oligosaccharide component and a high-intensity sweetener. The compositions may provide a comparable flavor profile or better flavor profile than an identical amount, a substantially identical amount, or comparable amount of a control composition consisting essentially of the oligosaccharide component only (the control composition does not include the high-intensity sweetener). The compositions described herein may be used to replace the control composition as a flavor enhancer in a finished product. For example, flavors of such compositions may be reported by a panel of subjects to be more favorable than compositions comprising an identical amount, a substantially identical amount, or comparable amount of the oligosaccharide component only. A composition comprising both the oligosaccharide component and the high-intensity sweetener may be reported by a panel of subjects to be perceived as sweeter, more favorable, and having a better texture compared to a composition comprising the oligosaccharide component only or the high-intensity sweetener only.

The oligosaccharide component may by itself provide a comparable flavor profile or better flavor profile than an identical amount, a substantially identical amount, or comparable amount of a control composition comprising primarily monosaccharides and/or disaccharides. The oligosaccharide component of the compositions described herein may by themselves or in combination with the high-intensity sweetener be used to replace the control composition as a flavor enhancer in a finished product. Flavor profiles may be characterized across a panel of human subjects.

The compositions described herein may provide a comparable texture profile or better texture profile than an identical amount, a substantially identical amount, or comparable amount of a control composition wherein the control composition comprises primarily monosaccharides and/or disaccharides. The compositions described herein may be used to replace the control composition as a texture enhancer in a finished product. Texture may be characterized by factors such as weight, moisture content, porosity, density, and other factors. Texture may also be surveyed across a panel of human subjects.

The compositions described herein comprise a oligosaccharide component and a high-intensity sweetener. The oligosaccharide component may be capable of providing a better texture profile in a finished product (such as a foodstuff, e.g., a baked good, cake, etc.) compared to a finished product including the high-intensity sweetener only. For example, a finished product may be reported by a panel of human subjects to have a more favorable texture compared to a finished product comprising the high-intensity sweetener only. As an example, a baked good comprising both the oligosaccharide component and the high-intensity sweetener may provide a better mouthfeel, be moister, be crispier, or otherwise be more favorable to a panel of human subjects compared to a finished product comprising the high-intensity sweetener only.

In some examples, the oligosaccharide component of the compositions described herein may by itself provide a comparable texture profile or better texture profile than an identical amount, a substantially identical amount, or comparable amount of a control composition wherein the control composition comprises primarily monosaccharides and/or disaccharides. The oligosaccharide component of the compositions described herein may be used to replace the control composition as a texture enhancer in a finished product.

In other examples, the compositions described herein (comprising the oligosaccharide component and the high-intensity sweetener) may provide a comparable texture profile or better texture profile than an identical amount, a substantially identical amount, or comparable amount of a control composition comprising primarily the high-intensity sweetener (not comprising the oligosaccharide component). The compositions described herein may be used to replace the control composition (comprising the high-intensity sweetener but not the oligosaccharide component) as a texture enhancer in a finished product.

The compositions described herein may provide a comparable binding profile or better binding profile than an identical amount, a substantially identical amount, or comparable amount of a control composition wherein the control composition comprises primarily monosaccharides and/or disaccharides. The compositions described herein may be used to replace the control composition as a binding enhancer in a finished product.

The compositions described herein may provide a comparable glazing profile or better glazing profile than an identical amount, a substantially identical amount, or comparable amount of a control composition wherein the control composition comprises primarily monosaccharides and/or disaccharides. The compositions described herein may be used to replace the control composition as a glazing enhancer in a finished product.

The compositions described herein may provide a comparable moistness or better moistness than an identical amount, a substantially identical amount, or comparable amount of a control composition wherein the control composition comprises primarily monosaccharides and/or disaccharides. The compositions described herein may be used to replace the control composition to provide moistness in a finished product.

The compositions described herein may provide a comparable color profile or better color profile than an identical amount, a substantially identical amount, or comparable amount of a control composition wherein the control composition comprises primarily monosaccharides and/or disaccharides. The compositions described herein may be used to replace the control composition as a color enhancer in a finished product. For example, the compositions provided herein may be capable of caramelization, and thereby confer a desirable golden brown and/or brown color to an example baked product (e.g., a cake) compared to a composition comprising the high-intensity sweetener only.

The compositions described herein may provide a comparable dissolution profile or better dissolution profile than an identical amount, a substantially identical amount, or comparable amount of a control composition wherein the control composition comprises primarily monosaccharides and/or disaccharides. The compositions described herein may be used to replace the control composition as a dissolution enhancer in a finished product. In some cases, the dissolution of a composition may be 5%, 10%, 15%, 20%, 30%, 40%, 50%, 70%, 80%, 90%, or 100% more than an identical amount, a substantially identical amount, or comparable amount of the control composition.

The compositions described herein may provide a comparable mouthfeel or better mouthfeel than an identical amount, a substantially identical amount, or comparable amount of a control composition wherein the control composition comprises primarily monosaccharides and/or disaccharides. Mouthfeel may be surveyed across a panel of human subjects.

The compositions described herein may provide a comparable viscosity or better viscosity than an identical amount, a substantially identical amount, or comparable amount of a control composition wherein the control composition comprises primarily monosaccharides and/or disaccharides.

The compositions described herein may provide a comparable hygroscopicity or better hygroscopicity than an identical amount, a substantially identical amount, or comparable amount of a control composition wherein the control composition comprises primarily monosaccharides and/or disaccharides. In some cases, the hygroscopicity of a composition may be 5%, 10%, 15%, 20%, 30%, 40%, 50%, 70%, 80%, 90%, or 100% more than an identical amount, a substantially identical amount, or comparable amount of the control composition.

The compositions described herein may provide a comparable water-retention or better water-retention than an identical amount, a substantially identical amount, or comparable amount of a control composition wherein the control composition comprises primarily monosaccharides and/or disaccharides. In some cases, the water-retention of a composition may be 5%, 10%, 15%, 20%, 30%, 40%, 50%, 70%, 80%, 90%, or 100% more than an identical amount, a substantially identical amount, or comparable amount of the control composition.

The compositions described herein may provide a lower calorie composition than an identical amount, a substantially identical amount, or comparable amount of a control composition wherein the control composition comprises primarily monosaccharides and/or disaccharides. In some cases, the calorie count of a composition may be 5%, 10%, 15%, 20%, 30%, 40%, 50%, 70%, 80%, 90%, or 100% less than an identical amount, a substantially identical amount, or comparable amount of the control composition.

The compositions described herein may provide a lower glycemic index than an identical amount, a substantially identical amount, or comparable amount of a control composition wherein the control composition comprises primarily monosaccharides and/or disaccharides. In some cases, the glycemic index of a composition may be 5%, 10%, 15%, 20%, 30%, 40%, 50%, 70%, 80%, 90%, or 100% less than an identical amount, a substantially identical amount, or comparable amount of the control composition.

The compositions described herein may provide a comparable caramelization or better caramelization than an identical amount, a substantially identical amount, or comparable amount of a control composition wherein the control composition comprises primarily monosaccharides and/or disaccharides.

The compositions described herein may provide a comparable surface texture or better surface texture than an identical amount, a substantially identical amount, or comparable amount of a control composition wherein the control composition comprises primarily monosaccharides and/or disaccharides.

In some examples, the compositions described herein may provide a comparable surface texture or better surface texture than an identical amount, a substantially identical amount, or comparable amount of a control composition comprising primarily the high-intensity sweetener but not the oligosaccharide component. The oligosaccharide component may be capable of enhancing the surface texture of the composition and/or a foodstuff the composition may be used in.

The compositions described herein may provide a comparable crystallization or better crystallization than an identical amount, a substantially identical amount, or comparable amount of a control composition wherein the control composition comprises primarily monosaccharides and/or disaccharides.

The compositions described herein may provide comparable structural properties as an identical amount, a substantially identical amount, or comparable amount of a control composition wherein the control composition comprises primarily monosaccharides and/or disaccharides.

The compositions described herein may provide less aftertaste compared to an identical amount, a substantially identical amount, or comparable amount of a control composition wherein the control composition comprises primarily monosaccharides and/or disaccharides.

The compositions described herein may provide less aftertaste compared to an identical amount, a substantially identical amount, or comparable amount of a control composition comprising primarily the oligosaccharide component but not the high-intensity sweetener. The high-intensity sweetener may be capable of decreasing the aftertaste of the composition.

The compositions described herein may provide less bitterness compared to an identical amount, a substantially identical amount, or comparable amount of a control composition comprising the high-intensity sweetener but not the oligosaccharide component. The oligosaccharide component may be capable of decreasing the bitterness of the composition or a foodstuff the composition may be used in.

Different combinations of oligosaccharides may confer improved dissolution profiles, hygroscopicity profiles, and taste profiles to the oligosaccharide component compared to each of the oligosaccharide used alone.

### Finished products

The composition may be used to prepare finished products. The composition may also be treated in some physical or chemical way before or during incorporation into a foodstuff, cosmetic, or nutraceutical. It may be directly incorporated into a product, or it may be incorporated into, for example, a dough, cake mixture, chocolate mixture, or other foodstuff precursor; a cosmetic base composition; or a nutraceutical, and be optionally cooked or otherwise treated in a way which may cause chemical modification, a change of texture a change of color, or other modification. The food composition may be a fat-based composition. The food composition may be a water-based composition.

In some examples, the foodstuff can be, but is not limited to, a cake, cookie brownie, cookie, pie, cobbler, pastry, bun, scone, bread, roll, Danish, donut, torte, muffin, cupcake, milkshake, ice cream, frozen yogurt, custard, gelato, waffle, pancake, jam, or a combination thereof. In some examples, the foodstuff can be an edible product.

A foodstuff, cosmetic, or nutraceutical may be produced from a composition described herein. For example, in the food industry the saccharide formulations produced by the current compositions may be used as sweeteners, added dietary fiber, or humectants. The composition may be used as a sweetener. The composition may be incorporated into cakes, bread, or other baked good, or into chocolate or other confectionery such as toffee, fudge, meringue, jam, jelly or caramel; or drinks, for example, to provide favorable taste or color characteristics or to increase dietary fiber content. In some examples, the composition may be incorporated into animal feed.

The disclosure provides a foodstuff, a cosmetic, or a nutraceutical comprising the composition of the invention. The foodstuff can comprise an oligosaccharide mixture (e.g., the oligosaccharide component). The oligosaccharide component comprises cello-oligosaccharides with a degree of polymerization of from two to six, and xylo-oligosaccharides with a degree of polymerization of from two to twelve, and optionally may further comprise mixed-linkage glucan oligosaccharides with a degree of polymerization of from two to five, manno-oligosaccharides having a degree of polymerization of from two to twelve, and xyloglucan oligosaccharides having a degree of polymerization of from four to twelve. The foodstuff may further comprise a high-intensity sweetener. The high-intensity sweetener can comprise a sugar substitute and/or a sugar and/or both.

The finished product, for example, a foodstuff, such as a baked good may comprise at least 0.5%, 1%, 1.5%, 2%, 3%, 4%, 5%, 6%, 7%, 8%, 9%, 10%, 11%, 12%, 13%, 14%, 15%, 16%, 17%, 18%, 19%, 20%, 25%, 30%, 35%, 40%, 45%, 50%, or more of the sweetener composition on a dry weight basis. In some examples, the finished product, for example, a foodstuff, such as a baked good may comprise at most 0.5%, 1%, 1.5%, 2%, 3%, 4%, 5%, 6%, 7%, 8%, 9%, 10%, 11%, 12%, 13%, 14%, 15%, 16%, 17%, 18%, 19%, 20%, 25%, 30%, 35%, 40%, 45%, or 50% of the sweetener composition. For example, the finished product can comprise about 1% of the sweetener composition, about 5% of the sweetener composition, about 10% of the sweetener composition, about 15% of the sweetener composition, or other amounts of the sweetener composition on a dry weight basis.

For example, a foodstuff may comprise about 10% sweetener composition on a dry weight basis. The sweetener composition may comprise about 0.5% (or about 1:200) high-intensity sweetener. In this example, the foodstuff may comprise about 0.05% high-intensity sweetener. In the same example, the sweetener composition may comprise about 9.95% oligosaccharide mixture (e.g., the oligosaccharide component). Accordingly, in this example, the foodstuff may comprise about 9.95% oligosaccharide mixture (e.g., the oligosaccharide component) on a dry weight basis.

In another example, a foodstuff may comprise about 10% sweetener composition. The sweetener composition may comprise about 2% (or about 1:50) high-intensity sweetener. In this example, the foodstuff may comprise about 0.2% high-intensity sweetener. In the same example, the sweetener composition may comprise about 98% oligosaccharide mixture (e.g., the oligosaccharide component). Accordingly, the foodstuff may comprise about 9.8% oligosaccharide mixture on a dry weight basis.

For example, a foodstuff may comprise about 10% sweetener composition on a dry weight basis. The sweetener composition may comprise at least 0.3%, 0.35%, 0.4%, 0.45%, 0.5%, 0.55%, 0.6%, 0.65%, 0.7%, 0.75%, 0.8%, 0.85%, 0.90%, 0.95%, 1%, 1.2%, 1.5%, or 2% high-intensity sweetener. The foodstuff may comprise at least 0.03%, 0.035%, 0.04%, 0.045%, 0.05%, 0.055%, 0.06%, 0.07%, 0.075%, 0.08%, 0.085%, 0.095%, 0.1%, 0.12%, 0.15%, 0.2%, or more high-intensity sweetener. The amounts of the oligosaccharide mixture (e.g., oligosaccharide component) and the amounts of the high-intensity sweetener may be calculated accordingly.

In some examples, the amount of the high-intensity sweetener can be at a ratio of at least 1:200,000, at least 1:100,000, at least 1:50,000, at least 1:25,000, at least 1:20,000, at least 1:10,000, at least 1:5000, or more to the total weight of the foodstuff on a dry weight basis. In some examples, the amount of the high-intensity sweetener can be at a ratio of at most 1:200,000, 1:100,000, 1:50,000, 1:25,000, 1:20,000, 1:10,000, 1:5000, or more to the total weight of the foodstuff on a dry weight basis.

The foodstuff may comprise other amounts of the sweetener composition. The sweetener composition may comprise other amounts of sugar and/or sugar substitute. The foodstuff may comprise other amounts of the oligosaccharide mixture.

### Properties of the composition and the finished product

In some examples, the foodstuff can comprise a taste of bitterness. In some cases, the bitter taste of the foodstuff may be minimized. In some examples, the degree or level of bitterness of the foodstuff taste can be minimal. In some cases, the taste of the foodstuff can be substantially free of bitterness.

In the cosmetics industry, saccharides can be useful as ingredients, as they may improve texture and moisture retention, act as UV-absorbing molecules, maintain a gel or cream structure, and/or serve as bulking agents. The compositions described herein can be incorporated into nutraceutical compositions, as the dietary fiber they provide may encourage digestive health, well-regulated gut flora, and/or other benefits to wellbeing. In this context, they may also be used in a probiotic drink or other prebiotic or probiotic formulation.

Compositions described herein may be used to alter one or more properties of the finished product. Such properties include, but are not limited to, sweetness, texture, mouthfeel, binding, glazing, smoothness, moistness, viscosity, color, hygroscopicity, flavor, bulking, water-retention, caramelization, surface texture, crystallization, structural properties and dissolution.

In some cases, the compositions described herein may provide a property to a finished product which is comparable to or better than the same property as provided by a saccharide mixture comprising primarily monosaccharides and/or disaccharides. The control composition may be a saccharide used commonly in consumables, for instance, a monosaccharide composition such as glucose, fructose, etc, a disaccharide composition such as sucrose or an artificial sugar composition. The term "comparable" as used herein may mean that the two compositions may be up to 100%, up to 95%, up to 90%, or up to 80% identical. For instance, comparable can mean that the composition is up to 90% identical to the control composition.

In some examples, the compositions described herein may be used to increase the fiber content of a finished product such as a foodstuff or a nutraceutical. The compositions may provide a higher level of fiber in the finished product as compared to an identical amount, a substantially identical amount, or comparable amount of a control composition wherein the control composition comprises primarily monosaccharides and/or disaccharides. In some cases, the compositions may improve the fiber content of the finished product without negatively affecting any other properties such as taste, sweetness, mouthfeel, texture, binding, or any other properties described herein. In some cases, the fiber content of a composition may be 5%, 10%, 15%, 20%, 30%, 40%, 50%, 70%, 80%, 90%, or 100% more than an identical amount, a substantially identical amount, or comparable amount of the control composition.

Compositions may be used to alter the properties of a finished product such as a foodstuff, nutraceutical, or cosmetic. In order to alter the properties of the finished products, the finished products may additionally comprise a polysaccharide, for example, a cellulosic polysaccharide, such as cellulose, or a polysaccharide derivative, for example, a cellulose derivative, such as carboxymethylcellulose, or a polysaccharide aggregate, for example, a portion of lignocellulosic biomass. The finished products can comprise from greater than 0% to 40% by dry weight of polysaccharide, polysaccharide derivative, or polysaccharide aggregate, from greater than 1% to 30% by dry weight of polysaccharide, polysaccharide derivative, or polysaccharide aggregate, from greater than 5% to 25% by dry weight of polysaccharide, polysaccharide derivative, or polysaccharide aggregate, or from greater than 10% to 20% by dry weight of polysaccharide, polysaccharide derivative, or polysaccharide aggregate. The concentration of a composition comprising polysaccharides and a mixture of oligosaccharides in a finished product may be from 0.1% to 40% w/w. The concentration of a composition comprising polysaccharides and a mixture of oligosaccharides in a finished product may be from 0.1% to 0.5%, 0.1% to 1%, 0.1% to 5%, 0.1% to 10%, 0.1% to 15%, 0.1% to 20%, 0.1% to 25%, 0.1% to 30%, 0.1% to 35%, 0.1% to 40%, 0.5% to 1%, 0.5% to 5%, 0.5% to 10%, 0.5% to 15%, 0.5% to 20%, 0.5% to 25%, 0.5% to 30%, 0.5% to 35%, 0.5% to 40%, 1% to 5%, 1% to 10%, 1% to 15%, 1% to 20%, 1% to 25%, 1% to 30%, 1% to 35%, 1% to 40%, 5% to 10%, 5% to 15%, 5% to 20%, 5% to 25%, 5% to 30%, 5% to 35%, 5% to 40%, 10% to 15%, 10% to 20%, 10% to 25%, 10% to 30%, 10% to 35%, 10% to 40%, 15% to 20%, 15% to 25%, 15% to 30%, 15% to 35%, 15% to 40%, 20% to 25%, 20% to 30%, 20% to 35%, 20% to 40%, 25% to 30%, 25% to 35%, 25% to 40%, 30% to 35%, 30% to 40%, or 35% to 40% w/w. The concentration of a composition comprising polysaccharides and a mixture of oligosaccharides in a finished product may be 0.1%, 0.5%, 1%, 5%, 10%, 15%, 20%, 25%, 30%, 35%, or 40% w/w. The concentration of a composition comprising polysaccharides and a mixture of oligosaccharides in a finished product may be at least 0.1%, 0.5%, 1%, 5%, 10%, 15%, 20%, 25%, 30%, or 35% w/w. The concentration of a composition comprising polysaccharides and a mixture of oligosaccharides in a finished product may be at most 0.5%, 1%, 5%, 10%, 15%, 20%, 25%, 30%, 35%, or 40% w/w.

### EXAMPLES

The following illustrative examples are representative of embodiments of the compositions and methods described herein and are not meant to be limiting in any way.

### Example 1 - Stevia boosts sweetness of saccharide solutions without comparable bitterness at stevia : oligosaccharide ratios of between ~1:1000 and ~1:100

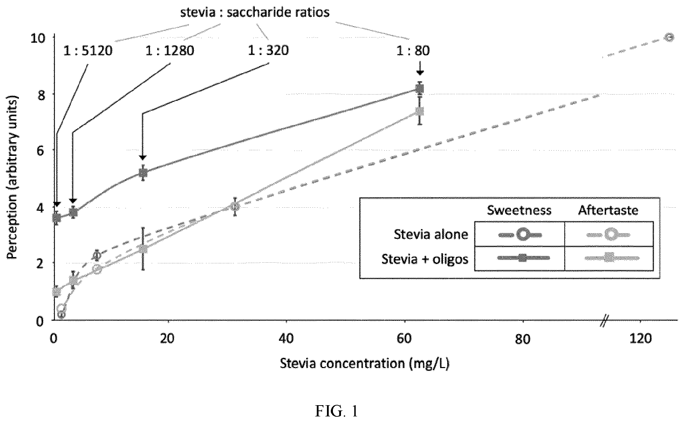

Solutions were prepared and tasted as follows:
1. Solutions comprising 1-128 mg/L stevia +/- 5 g/L oligosaccharides were created
2. Samples were tasted by a 5-person panel who were asked to quantitate sweetness and aftertaste relative to 128 mg/L stevia
3. Data shown as average+/- standard error in FIG. 1
4. Stevia:oligosaccharide ratios above 1:80 had surprisingly superior sweetness:aftertaste ratios compared to Stevia alone. Stevia:oligosaccharide ratios below 1:1280 were not significantly sweeter than oligosaccharide alone. Therefore, surprisingly ratios of stevia:oligosaccharide between ~1:100 and ~1:1000 had increased sweetness without a comparable increase in aftertaste. This allowed greater sweetness for less
stevia. This allowed greater sweetness for less indigestible saccharide. This allowed

### Example 2 - Stevia boosts the sweetness of saccharide-containing bakery products without comparable bitterness at stevia : oligosaccharide ratios of between ~1:1500 and ~1:150 [00369]

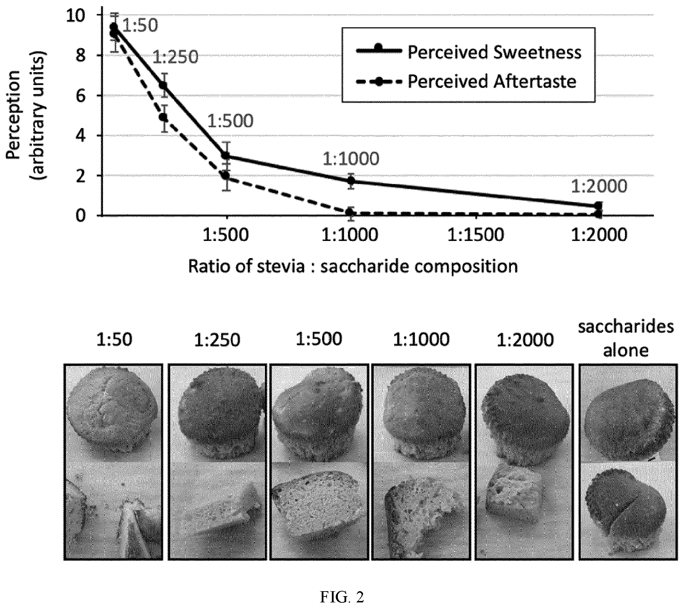

Cakes were prepare and tasted as follows:
**1.** Whisk 50 g saccharide mixture (comprising 45% (w/w) xylo-oligosaccharide, 40% (w/w) cello-oligosaccharide, 15% (w/w) cellulose) into 50 g butter until creamed. Add 50 g egg and whisk until smooth. Add 15 g milk and 2.5 g vanilla extract and whisk in. Sift in 25 g self-rising flour and 2 g baking powder and whisk until smooth. Bake at 180°C for approximately 15 minutes.
2. Samples were tasted by a 5-person panel who were asked to quantitate sweetness and aftertaste relative to 128 mg/L stevia which was the highest amount of stevia in the composition.
3. Data shown as average +/- standard error in FIG. 2. Surprisingly, stevia:oligosaccharide ratios between~ 1:150 and~1:1500 had the best sweetness: aftertaste numbers.
4. The cakes had a texture of similar to that when using sugar and had a soft, cakey, chewy consistency, was able to hold moisture and had a sugar-like rise and color (yellow/light brown with browned edges and cracks) and a conventional cake-like wrinkling structure as is shown in FIG. 2.

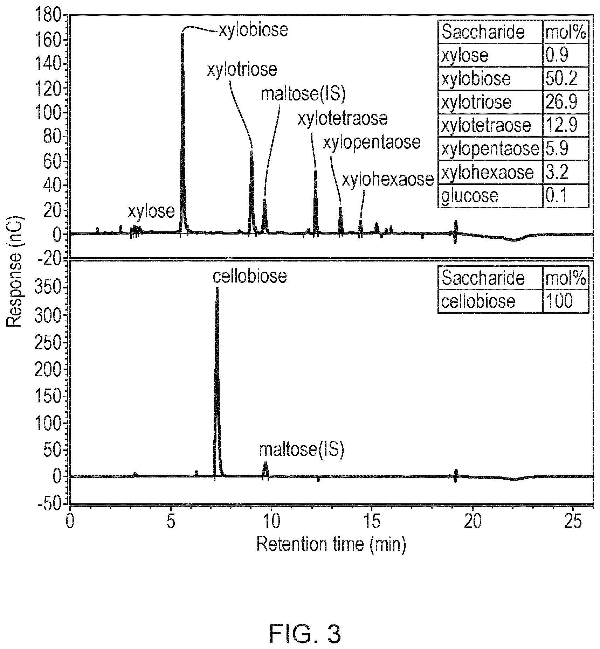

FIG. 3 illustrates the cello-oligosaccharides and xylo-oligosaccharides in the oligosaccharide mixture used in this example.

### Example 3: Effect of different sweeteners in muffins

### Cakes were prepared and tasted as follows:

Whisk 66 g saccharide mixture (comprising 75% (w/w) xylo-oligosaccharide, 10% (w/w) cello-oligosaccharide, and 15% (w/w) cellulose), OR whisk 66 g cane sugar for control, into 66 g butter until creamed.

Add 58.5 g egg and whisk until smooth.

Add 3 g vanilla extract and whisk in.

Sift in 66 g self-rising flour and 1.5 g baking powder and whisk until smooth.

For non-control mixtures 0.146 g saccharin, 0.33 g aspartame, 0.264 g monkfruit extract and a 0.132 g stevia and 0.132 g monkfruit extract combination, or no additional ingredient were added.

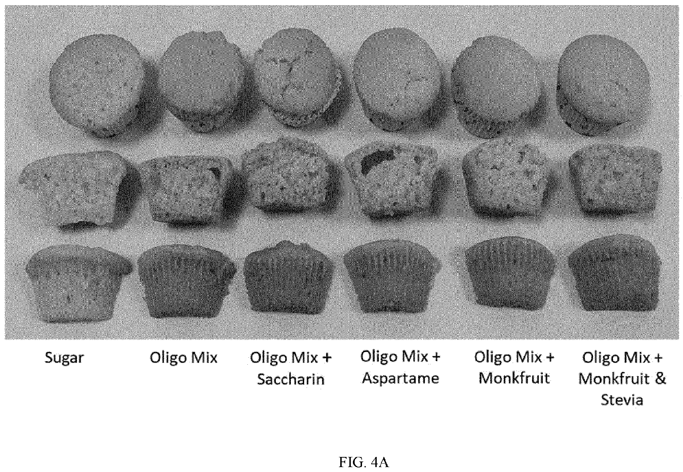

The mixture makes approximately six 40 g portions of dough which were placed into muffin cakes and baked at 180 °C for approximately 15 minutes. FIG. 4A shows the muffins produced using various sweeteners.

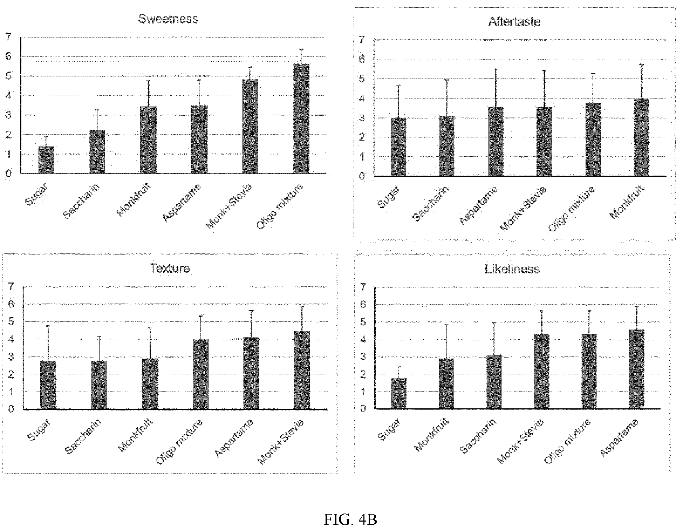

Samples were tasted by a 9-person panel who were asked to rank the muffins according to: sweetness (1=sweetest, 6=least sweet), aftertaste (1=no aftertaste, 6=strongest aftertaste), texture (1=best texture, 6=worst texture), how much they like them (1=best muffin, 6=worst muffin). FIG. 4B shows the results from the tasting.

Sugar muffins were ranked as the sweetest muffins. Oligosaccharide mixture + saccharin muffins were the ranked as the sweetest muffins compared in the group of high-intensity sweeteners + oligosaccharide mixture. Aspartame is known to be heat unstable but oligosaccharide mixture muffins with aspartame taste sweeter than oligosaccharide mixture + monkfruit + stevia.

Texture of sugar muffins were ranked higher than others. Texture of oligosaccharide mixture muffins with saccharin or monkfruit extract were ranked better than oligosaccharide mixture only muffins. Texture of oligosaccharide mixture muffins with aspartame or monkfruit + stevia were ranked lower than pure oligosaccharide mixture muffins. High-intensity sweeteners like saccharin or monkfruit therefore were found to improve the texture of oligosaccharide mixture muffins.

Sugar muffins were found to have the lowest aftertaste. Oligosaccharide mixture muffins with monkfruit have the strongest aftertaste. High-intensity sweeteners like saccharin, aspartame, or monkfruit in combination with stevia were found to improve the aftertaste of oligosaccharide mixture muffins.

Sugar muffins were ranked higher for likeliness. Oligosaccharide mixture muffins with monkfruit, saccharin, monkfruit + stevia were liked more than oligosaccharide mixture on its own. Oligosaccharide mixture muffins with aspartame were ranked lower. High-intensity sweeteners like saccharin, monkfruit, or monkfruit in combination with stevia improves consumer acceptance.

Oligosaccharide mixture muffins with saccharin were ranked higher than other oligosaccharide mixture combinations regarding texture, sweetness, and aftertaste

### Example 4: Effect of saccharin combined with different bulk sweeteners and oligosaccharide mixture in muffins

### Cakes were prepared and tasted as follows:

Into 66 g butter, whisk until creamed: 66 g saccharide mixture (comprising 75% (w/w) xylo-oligosaccharide, 10% (w/w) cello-oligosaccharide, and 15% (w/w) cellulose) and one selected from: 6 g maltodextrin, 66 g erythritol, or 66 g allulose.

Add 58.5 g egg and whisk until smooth.

Add 3 g vanilla extract and whisk in.

Sift in 66 g self-rising flour and 1.5 g baking powder and whisk until smooth.

Add 0.146 g Saccharin.

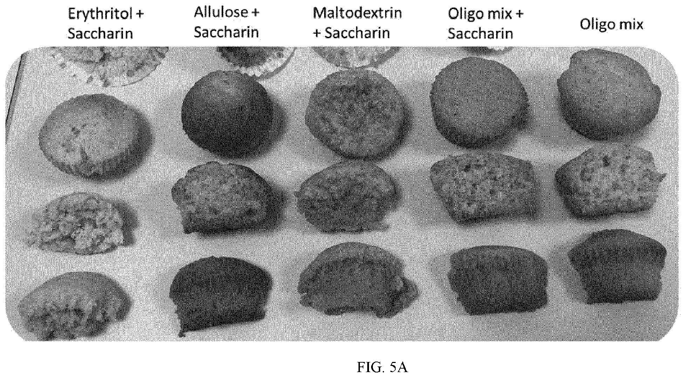

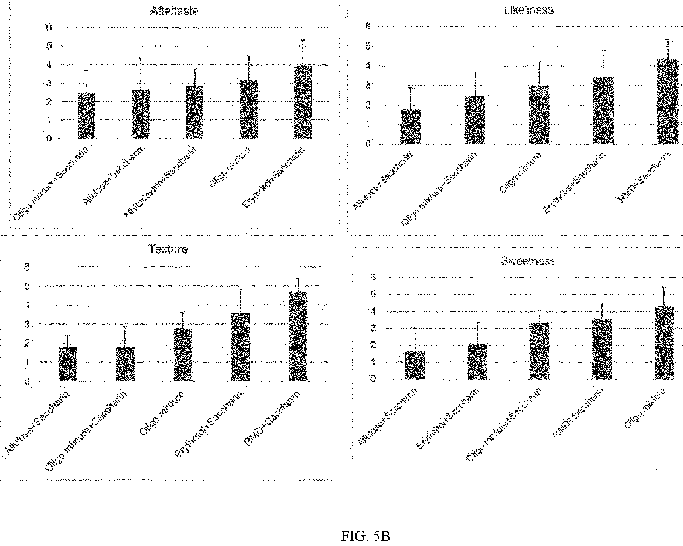

The mixture makes approximately six 40 g portions of dough which were placed into muffin cakes and baked at 180 °C for approximately 15 minutes. FIG. 5A shows the results of the cakes prepared. Cakes made with a combination of erythritol and saccharin were found to be pale and whitish in color. Allulose and saccharin muffins were found to be too dark with a brownish color outside. Maltodextrin and saccharin cakes were found to have an irregular surface and were found to be wet inside as well. The oligosaccharide mixture and saccharin combination cakes had an even surface and a color comparable to the cakes made with the oligosaccharide combination alone. These results show that the non-desirable properties (evenness, color, and texture) of bulking agents such as maltodextrin, erythritol and allulose were reduced when replaced with an oligosaccharide mixture. Tasting was performed as described in Example 3 and results are shown in FIG. 5B.

### Example 5 - Oligosaccharide mixture muffins with different high-intensity sweeteners

### Cakes were prepared and tasted as follows:

Whisk 557.7 g saccharide mixture (comprising 75% (w/w) xylo-oligosaccharide, 10% (w/w) cello-oligosaccharide, and 15% (w/w) cellulose), OR whisk 66 g cane sugar for control, into 557.7 g butter until creamed.

Add 494.3 g egg and whisk until smooth.

Add 25.4 g vanilla extract and whisk in.

Sift in 557.7 g self-rising flour and 12.7 g baking powder and whisk until smooth.

The mixture was then split into 5, into which was added 0.146 g saccharin, 0.33 g aspartame, 0.264 g monkfruit extract, 0.132 g stevia and 0.132 g monkfruit extract, or no additional ingredient. Different amounts of high-intensity sweeteners were added based on their known level of sweetness.

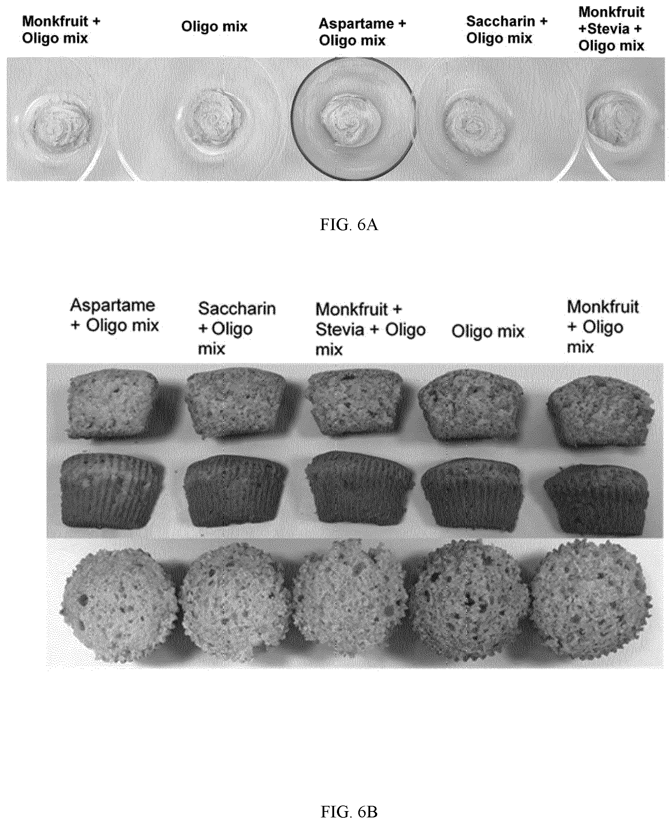

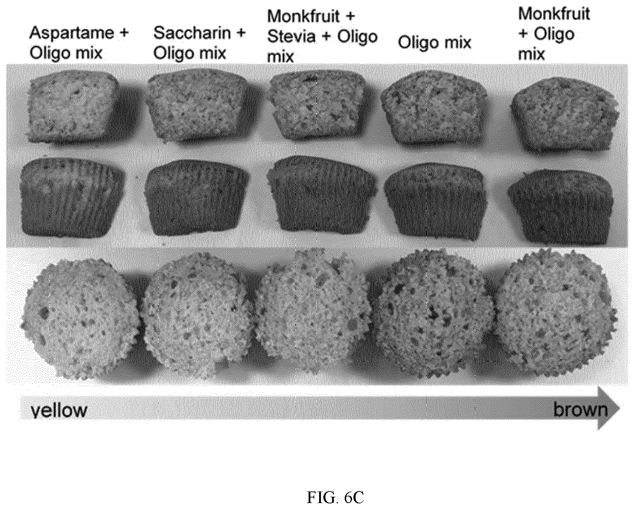

No difference in muffin batters regarding texture, color and spreadability were overserved in doughs following addition of different high-intensity sweeteners (as shown in FIG. 6A).

The mixture made approximately six 40 g portions of dough which were placed into muffin cakes and baked at 180 °C for approximately 15 minutes. (FIG. 6B).

Oligosaccharide mixture in combination with aspartame, saccharin, or stevia lead to brighter muffins from outside and inside. Oligosaccharide mixture in combination with monkfruit was darker than the oligosaccharide mixture muffins. Color of oligosaccharide mixture muffins was therefore changed by adding high-intensity sweeteners. To make the oligosaccharide mixture muffins brighter, oligosaccharide mixture can be combined with saccharin or stevia.

The firmness and springiness of the muffins was measured using the TA-XTPlusC Texture Analyser (Stable Microsystems, UK) using the "ExponentC" software, according to the following parameters in Table 1.

**Table 1: Parameters for texture measurement**

| Parameter | Value |
|---|---|
| Selected Probe | P/2" |
| | 2.0" Cylinder Aluminium |
| Accessory | Using 30 kg load cell |
| Pre-Test Speed | 2.0 mm/s |
| Test Speed | 1.0 mm/s |
| Post-Test Speed | 10.0 mm/s |
| Target Mode | Strain |
| Strain | 25 % |
| Time | 30 sec |
| Trigger Type | Auto -5g |
| Tare Mode | Auto |
| Data Acquisition Rate | 500 pps |

Results are shown in Table 2 below and in FIGS. 6A and 6B. Adding high-intensity sweeteners decreased the firmness of the oligosaccharide mixture muffins. Adding high-intensity sweeteners also increased the springiness of oligosaccharide mixture muffins.

**Table 2: Texture results of muffin samples**

| **Samples + Oligosaccharide mixture** | **Firmness [g]** | **Springiness [%]** |
|---|---|---|
| Monkfruit | 430.96 ± 71.36 | 56.76 ± 0.26 |
| Monkfruit + Stevia | 500.51 ± 84.69 | 56.54 ± 1.90 |
| Aspartame | 543.84 ± 543.84 | 54.96 ± 1.04 |
| Saccharin | 549.77 ± 549.77 | 55.30 ± 0.50 |
| No high-intensity sweetener (HIS) | 606.47 ± 606.47 | 55.16 ± 0.05 |

### Example 6 - Effect of high-intensity sweeteners on oligosaccharide mixture muffins with different oligosaccharide ratios

### Cakes were prepared and tasted as follows:

Whisk 557.7 g of one of three different saccharide mixture (comprising 83.6g or 15% microcrystalline cellulose and 474.04g or 85% of xylo-oligosaccharide and cello-oligosaccharide mixture in various ratios) into 557.7 g butter until creamed. 90% (w/w) xylo-oligosaccharide (XOS) and 10% (w/w) cello-oligosaccharide (CB), 70% (w/w) xylo-oligosaccharide and 30% (w/w) cello-oligosaccharide, 50% (w/w) xylo-oligosaccharide, and 50% (w/w) cello-oligosaccharide mixtures were prepared.

Add 494.3 g egg and whisk until smooth.

Add 25.4 g vanilla extract and whisk in.

Sift in 557.7 g self-rising flour and 12.7 g baking powder and whisk until smooth.

Each mixture was then split into 5, into which was added: 0.048 g saccharin, 0.144 g saccharin, 0.043 g monkfruit and 0.043 g stevia, 0.129 g monkfruit and 0.129 g stevia, or no additional ingredient.

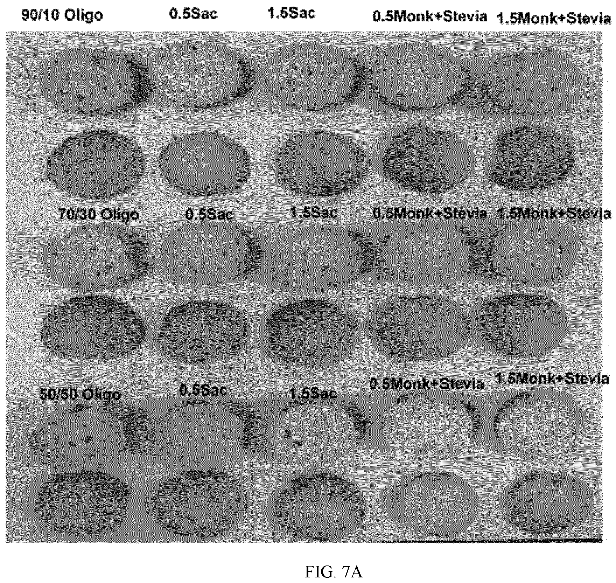

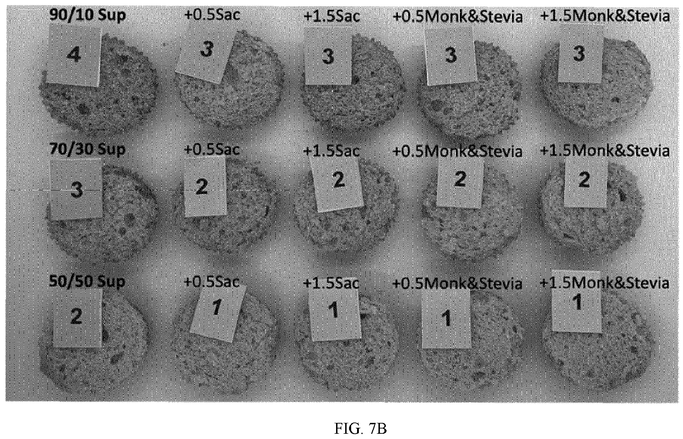

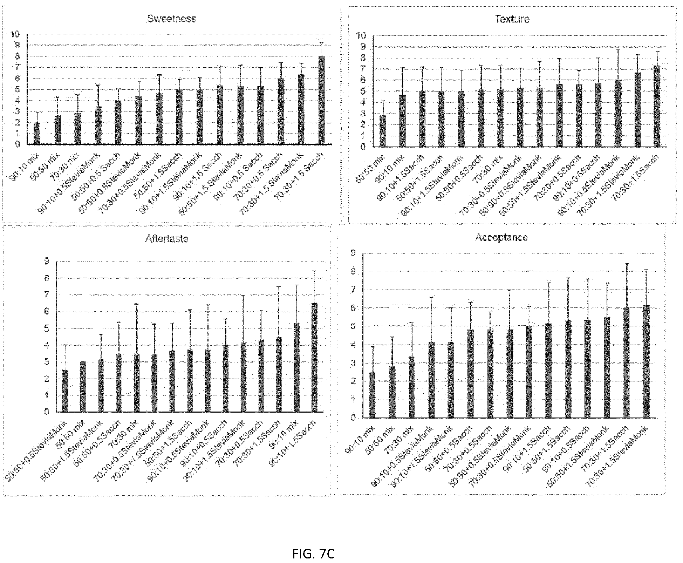

The mixture made approximately six 40 g portions of dough which were placed into muffin cakes and baked at 180 °C for approximately 15 minutes (as shown in FIGS. 7A and B).Tasting results are shown in FIG. 7C.

Adding high-intensity sweeteners had an effect on the color of oligosaccharide mixture muffins. Different XOS:CB ratios were found to affect the color of oligosaccharide mixture muffins. Different XOS:CB ratios were also found to affect spreadability and texture of muffin batter (with more CB, muffin batter was dryer and less spreadable).

90/10 (XOS:CB) - Color of the pure oligosaccharide mixture muffins is the darkest (4). Adding saccharin or monkfruit + stevia made the muffins brighter (from 4 to 3).

70/30 (XOS:CB) - Adding saccharin or monkfruit + stevia made the muffins brighter (from 3 to 2).

50:50 (XOS:CB) - With more CB, muffins became brighter (from 4 to 2). Adding saccharin or monkfruit + stevia made the muffins brighter (from 2 to 1).

### Example 7 - Effect of baking powder on oligosaccharide mixture muffins

### Cookies were prepared and tasted as follows:

Whisk 42.9 g saccharide mixture (comprising 75% (w/w) xylo-oligosaccharide, 10% (w/w) cello-oligosaccharide, and 15% (w/w) cellulose), OR whisk 42.9 g cane sugar for control, into 42.9 g butter until creamed.

Add 38 g egg and whisk until smooth.

Add 1.9 g vanilla extract and whisk in.

Sift in 42.9 g self-rising flour and in some batches 1.0 g baking powder and whisk until smooth.

For non-control mixtures 0.047 g saccharin was added.

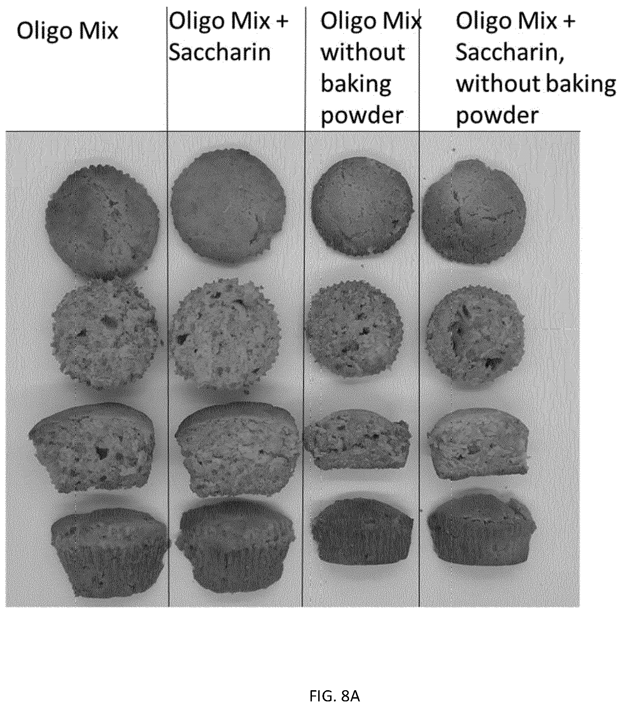

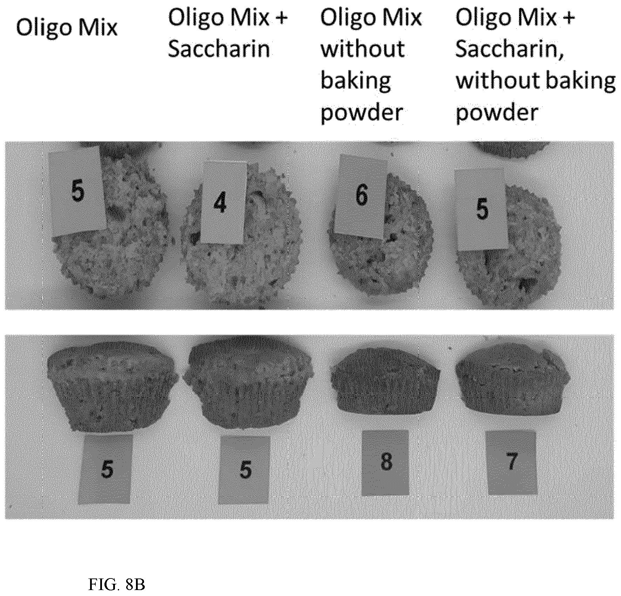

The mixture makes approximately six 40 g portions of dough which were placed into muffin cakes and baked at 180 °C for approximately 15 minutes (as shown in FIGS. 8A and 8B).

Baking powder was found to affect the color of the crust of oligosaccharide mixture muffins. The crust of oligosaccharide mixture muffins without baking powder was found to be darker. Adding saccharin to oligosaccharide mixture was found to change the color of the crumb. With saccharin the color of the crumb was found to be lighter.

### Example 8 (comparative)- Saccharide mixtures in presence of bulking sweeteners

### Cookies were prepared and tasted as follows:

Into eleven samples of 13.5 g butter, whisk until creamed one of each of the following:
**a)** 25 g sugar,
**b)** 25 g saccharide mixture (comprising 75% (w/w) xylo-oligosaccharide, 10% (w/w) cello-oligosaccharide, and 15% (w/w) cellulose),
**c)** 25 g maltodextrins,
**d)** 12.5 g maltodextrins and 12.5 g saccharide mixture (comprising 75% (w/w) xylo-oligosaccharide, 10% (w/w) cello-oligosaccharide, and 15% (w/w) cellulose),
**e)** 25 g allulose,
**f)** 12.5 g allulose and 12.5 g saccharide mixture (comprising 75% (w/w) xylo-oligosaccharide, 10% (w/w) cello-oligosaccharide, and 15% (w/w) cellulose),
**g)** 25 g tagatose,
**h)** 25 g erythritol,
**i)** 12.5 g erythritol and 12.5 g saccharide mixture (comprising 75% (w/w) xylo-oligosaccharide, 10% (w/w) cello-oligosaccharide, and 15% (w/w) cellulose),
**j)** 25 g inulin, or
**k)** 12.5 g inulin and 12.5 g saccharide mixture (comprising 75% (w/w) xylo-oligosaccharide, 10% (w/w) cello-oligosaccharide, 15% (w/w) cellulose).

Add 6.0 g egg and whisk until smooth. Add

1.0 g vanilla extract and whisk in.

Sift in 18.5 g flour and 0.5 g baking powder and whisk until smooth.

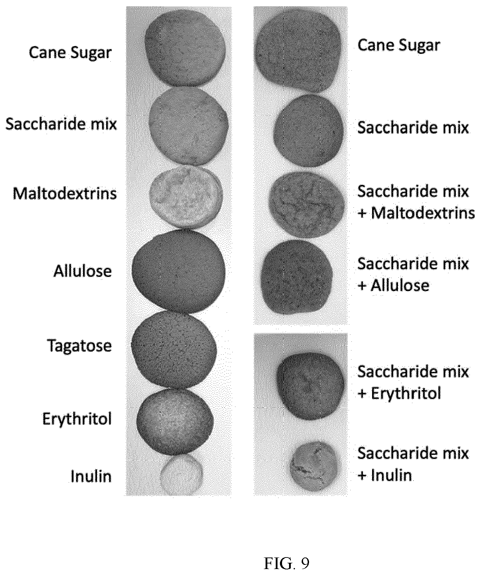

Mixture makes approximately six 40 g portions of dough which were baked at 180° C for 12 mins (results as shown in FIG. 9).

The saccharide mixture product looked and felt most like the sugar cookie and each of the other products was improved when the saccharide mixture was added. Saccharide mix cookies had an even surface, similar color compared to sucrose cookies, slightly darker edges. Spreadability was a bit less compared to sucrose cookies. The product felt chewy and slightly caky when broken apart. It tasted soft and chewy in the inside, while the edges tasted crunchy. Sweetness was lower but was found to be likeable.

Maltodextrin: The product was very dry, with a cavity inside the structure of the cookie. The overall cookie had a deformed shape because the exterior had caved in to close the cavity. The product was brittle and cold not bend without cracking: the texture did not resemble that of a muffin or cake. The colour was very bright, indicative of little browning, such as through Maillard reactions or caramelization. Irregular surface, air was trapped below the crust, pale color on outside and slightly darker inside, very tacky.

Maltodextrin plus saccharides: Irregular surface but less so than maltodextrin alone; air was entrapped below the crust; irregular color, inside was darker than the outside (outside was very pale); very tacky, felt gummy as well. The 'maltodextrin plus saccharides' cookie was preferred over the 'maltodextrin' cookie; the aesthetics, texture and mouthfeel better resembled the aesthetics, texture and mouthfeel of a cookie made with sugar.

Allulose: Texture was spongy, not hard, pliable even after cooling never became crispy, much darker than sucrose in color, tasted sweet.

Allulose plus saccharides: Like the allulose cookie, the 'allulose plus saccharides' cookie had a texture that was spongy, although the texture better resembled the texture of a cookie made with sucrose, for example having crispy edges. Likewise, the color better resembled the color of a sucrose cookie, it was much less dark than the 'allulose' cookie was still darker than the sugar cookie. The cookie tasted sweet. The 'allulose plus saccharides' cookie was preferred over the 'allulose' cookie; the aesthetics, texture and mouthfeel better resembled the aesthetics, texture and mouthfeel of a cookie made with sugar. The 'allulose plus saccharides' cookie was preferred over the 'saccharides' cookie; it was sweeter.

Tagatose: Texture was spongy, not hard, pliable even after cooling never became crispy, much darker than sucrose in color, tasted sweet.

Erythritol: Bumpy surface, surface color: dark brown / black edges and lighter brown in middle; cookies spread but limited rise in height; not chewy when broken apart; dry mouthfeel; profound strange aftertaste and cooling sensation were noticed.

Erythritol plus saccharides: A bit irregular surface; surface color: brown edges, pale in the middle with an appealing color; cookies spread, but also rose in height; not chewy when broken apart; dry mouthfeel; strange aftertaste and cooling sensation were noticed. The 'erythritol plus saccharides' cookie was preferred over the 'erythritol' cookie; the aesthetics, texture and mouthfeel better resembled the aesthetics, texture and mouthfeel of a cookie made with sugar. The 'erythritol plus saccharides' cookie was preferred over the 'saccharides' cookie; it was sweeter.

Inulin had a smooth surface. It was soft inside, dry on the edges. It had a very pale color, did not spread and did not brown. It was chewy when broken. Profound dry mouthfeel was found. **[00436]**

Inulin plus saccharides had a cracked surface. It was soft inside, dry on the edges. It had a pale-yellow color and did not spread. It was not chewy when broken. Dry mouthfeel was also found. The 'inulin plus saccharides' cookie was preferred over the 'inulin cookie'; the aesthetics, texture and mouthfeel better resembled the aesthetics, texture and mouthfeel of a cookie made with sugar; the 'inulin plus saccharides' cookie was sweeter then the 'inulin cookie'. The 'erythritol plus saccharides' cookie was preferred over the 'saccharides' cookie; it was sweeter.

The saccharide mixture was found to improve the qualities of all bulking sugars.

### Example 9 (comparative)- Saccharide mixtures in presence of bulking sweeteners

Cookies were prepared comprising saccharide mixture (comprising 75% (w/w) xylo-oligosaccharide, 10% (w/w) cello-oligosaccharide, and 15% (w/w) cellulose) and/or bulking sweeteners consisting of allulose, erythritol, maltodextrin and inulin, and tasted as follows:
Into twenty one samples of 13.5 g butter, whisk until creamed one of each of the following:
**a)** 25 g saccharide mixture (comprising 75% (w/w) xylo-oligosaccharide, 10% (w/w) cello-oligosaccharide, and 15% (w/w) cellulose),
**b)** 23.75 g saccharide mixture and 1.25 g bulking sweetener,
**c)** 20 g saccharide mixture and 5 g bulking sweetener,
**d)** 16.25 g saccharide mixture and 8.75 g bulking sweetener,
**e)** 12.5 g saccharide mixture and 12.5 g bulking sweetener,
**f)** 25 g bulking sweetener,

Add 6.0 g egg and whisk until smooth.

Add 1.0 g vanilla extract and whisk in.

Sift in 18.5 g flour and 0.5 g baking powder and whisk until smooth.

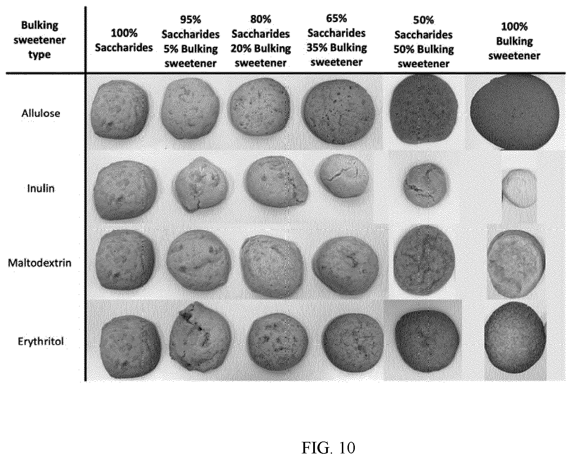

Mixture makes approximately six 40 g portions of dough which were baked at 180° C for 12 mins (results as shown in FIG. 10).

Allulose-containing cookies:
a. 5 % Allulose cookie: Texture feels chewy and slightly cakey; Bright colour (like saccharide cookie and sugar cookie); Spreadability was a bit less compared to 35 % allulose cookie; tasted soft chewy in the inside, edges tasted crunchy; Sweetness was pleasant.
b. 20 % Allulose cookie: Crispy texture, higher spreadability; Slightly cakey inside; A bit darker than oligosaccharide mix only cookie; tasted a bit sweeter than 5 % Allulose cookie;
c. 35 % Allulose: Texture was crispy, inside was a little bit cakey; good spreadability; darker colour, but still pleasant colour; tasted sweeter, but still pleasant
d. The 50% allulose plus saccharides cookie was preferred over all other combinations of allulose and saccharides.

Inulin-containing cookies:
a. 5% Inulin: Cracked, uneven surface; did not spread; Soft and cakey inside, dry on the edges; brighter colour than saccharide cookies and sugar cookies; not chewy when broken, sticky mouthfeel.
b. 20% Inulin: Uneven surface; spread the most compared to 5 %, 35 % and 50 % inulin taste a bit crunchy and chewy, but still dry and cakey inside; brighter colour than Oligosaccharide mix only cookies.
c. 35 % inulin: cracked surface; cakey inside, dry on the edges; bright colour; did not spread; not chewy, sticky and dry mouthfeel; tasted sweet
d. The 20% inulin cookie was preferred over all other combinations of inulin and saccharides.

Maltodextrin-containing cookies
a. 5 % Maltodextrin: even surface; texture feels chewy and slightly caky, crispy edges; regular colour, similar to saccharide cookie and sugar cookie;
b. 20 % Maltodextrin; spread a bit more; texture felt a bit gummy; a bit irregular surface; Regular colour, similar to saccharide cookie and sugar cookie
c. 35 % Maltodextrin: irregular surface; Air was entrapped below the crust (but less compared to 50 % Maltodextrin); regular colour, similar to saccharide cookie and sugar cookie; tacky, feels gummy
d. The 20% maltodextrin cookie was preferred over all other combinations of maltodextrin and saccharides.

### Erythritol-containing cookies

a. 5 % Erythritol: A bit irregular surface; irregular colour, bright in the middle, edges are darker; cookie spreads a bit; inside cakey and dry mouthfeel; strange aftertaste, cooling effect
b. 20 % Erythritol: A bit irregular surface, but regular cookie colour; cookies spread, but also rise; not chewy when broken apart; dry mouthfeel; strange aftertaste, cooling effect
c. 35 % Erythritol: A bit irregular surface, appealing colour; cookies spread, but also rise; not chewy when broken apart, inside cakey; dry mouthfeel; strange aftertaste, cooling effect
d. The 5% erythritol cookie was preferred over all other combinations of erythritol and saccharides.

## Claims

1. A sweetener composition comprising:
an oligosaccharide component comprising xylo-oligosaccharides with a degree of polymerization (DP) of two to twelve and cello-oligosaccharides with a DP of two to six, wherein the xylo-oligosaccharides and the cello-oligosaccharides are present at a xylo-oligosaccharide to cello-oligosaccharide w/w ratio of 19:1 to 1:1; and
a high-intensity sweetener,
wherein the oligosaccharide component and the high-intensity sweetener are present at an oligosaccharide component to high-intensity sweetener w/w ratio of 5000:1 to 50:1.

2. The sweetener composition of claim 1, wherein the high-intensity sweetener comprises a natural high-intensity sweetener, an artificial high-intensity sweetener, or a combination thereof.

3. The sweetener composition of claim 1 or claim 2, wherein the high-intensity sweetener comprises acesulfame potassium (Ace-K), advantame, aspartame, neotame, saccharin, a *Siraitia grosvenorii* Swingle (Luo Han Guo) fruit extract (SGFE), a steviol glycoside, sucralose, a clyclamate, glycyrrhizin, neohesperidin dihydrochalcone, thaumatin, or any combination thereof.

4. The sweetener composition of claim 1 or claim 2, wherein the cello-oligosaccharides and the xylo-oligosaccharides are present at a xylo-oligosaccharide to cello-oligosaccharide w/w ratio of 10:1 to 1:1 in the sweetener composition.

5. The sweetener composition of any one of claims 1 to 4, wherein an average sweetness level per unit weight of the high-intensity sweetener is at least 5 times greater than an average sweetness level of the oligosaccharide component, as determined by the average sweetness perception by a human subject.

6. The sweetener composition of any one of claims 1 to 5, wherein the sweetener composition comprises less than 40% by dry weight monosaccharides.

7. The sweetener composition of any one of claims 1 to 6, wherein the amount of sucrose, lactose, maltose, fructose, sugar alcohol (polyol), allulose, tagatose, maltodextrin, resistant maltodextrin, erythritol, inulin or any combination thereof is less than the amount of the xylo-oligosaccharides or the amount of the cello-oligosaccharides.

8. The sweetener composition of any one of claims 1 to 7, wherein the composition comprises less than 20% by dry weight maltodextrin.

9. The sweetener composition of any one of claims 1 to 8, wherein the xylo-oligosaccharides comprise xylose and arabinose monomers collectively at a xylose monomer to arabinose monomer ratio of 20:1 to 2:1.

10. The sweetener composition of any one of claims 1 to 9, further comprising a compound selected from a polysaccharide, a cellulosic polysaccharide, cellulose, a hemicellulosic polysaccharide, xylan, a polysaccharide derivative, a cellulose derivative, carboxymethylcellulose, a polysaccharide aggregate, a lignocellulosic material, or any combination thereof.

11. The sweetener composition of claim 10, wherein the sweetener composition comprises the polysaccharides, wherein the sweetener composition comprises at most 30% of the polysaccharides by dry weight.

12. The sweetener composition of any one of claims 1 to 11, further comprising a compound selected from a phenolic compound, a lignin, a portion of a lignin, a product of lignin breakdown, ferulic acid, a ferulic acid derivative, or any combination thereof.

13. The sweetener composition of any one of claims 1 to 12, wherein the oligosaccharide component comprises less than 0.5 ppm Al, As, B, Ba, Be, Ca, Cd, Co, Cr, Cu, Fe, Hg, K, Li, Mg, Mn, Mo, Na, Ni, P, Pb, S, Sb, Se, Si, Sn, Sr, Ti, Tl, V, and/or Zn.

## Patentansprüche

1. Eine Süßungsmittelzusammensetzung umfassend:
eine Oligosaccharidkomponente, die Xylo-Oligosaccharide mit einem Polymerisationsgrad (DP) von zwei bis zwölf und Cello-Oligosaccharide mit einem DP von zwei bis sechs umfasst, wobei die Xylo-Oligosaccharide und die Cello-Oligosaccharide in einem Gewichtsverhältnis von Xylo-Oligosaccharid zu Cello-Oligosaccharid von 19:1 bis 1:1 vorhanden sind; und
einen hochintensiven Süßstoff,
wobei die Oligosaccharidkomponente und der hochintensive Süßstoff in einem Gewichtsverhältnis von Oligosaccharidkomponente zu hochintensivem Süßstoff von 5000:1 bis 50:1 vorhanden sind.

2. Die Süßungsmittelzusammensetzung nach Anspruch 1, wobei der hochintensive Süßstoff einen natürlichen hochintensiven Süßstoff, einen künstlichen hochintensiven Süßstoff oder eine Kombination davon umfasst.

3. Die Süßungsmittelzusammensetzung nach Anspruch 1 oder Anspruch 2, wobei der hochintensive Süßstoff Acesulfam-Kalium (Ace-K), Advantame, Aspartame, Neotame, Saccharin, einen *Siraitia grosvenorii* Swingle (Luo Han Guo) Fruchtextrakt (SGFE), ein Steviolglykosid, Sucralose, ein Clyclamat, Glycyrrhizin, Neohesperidin-Dihydrochalcon, Thaumatin oder eine beliebige Kombination davon umfasst.

4. Die Süßungsmittelzusammensetzung nach Anspruch 1 oder 2, wobei die Cello-Oligosaccharide und die Xylo-Oligosaccharide in einem Gewichtsverhältnis von Xylo-Oligosaccharid zu Cello-Oligosaccharid von 10:1 bis 1:1 in der Süßungsmittelzusammensetzung vorliegen.

5. Die Süßungsmittelzusammensetzung nach einem der Ansprüche 1 bis 4, wobei der durchschnittliche Süßegrad pro Gewichtseinheit des hochintensiven Süßstoffs mindestens fünfmal größer ist als der durchschnittliche Süßegrad der Oligosaccharidkomponente, bestimmt anhand der durchschnittlichen Süßempfindung durch eine menschliche Person.

6. Die Süßungsmittelzusammensetzung nach einem der Ansprüche 1 bis 5, wobei die Süßungsmittelzusammensetzung weniger als 40 % Monosaccharide, bezogen auf das Trockengewicht, umfasst.

7. Die Süßungsmittelzusammensetzung nach einem der Ansprüche 1 bis 6, wobei die Menge an Saccharose, Lactose, Maltose, Fructose, Zuckeralkohol (Polyol), Allulose, Tagatose, Maltodextrin, resistentem Maltodextrin, Erythrit, Inulin oder einer Kombination davon geringer ist als die Menge der Xylo-Oligosaccharide oder die Menge der Cello-Oligosaccharide.

8. Die Süßungsmittelzusammensetzung nach einem der Ansprüche 1 bis 7, wobei die Zusammensetzung weniger als 20 % Maltodextrin, bezogen auf das Trockengewicht, umfasst.

9. Die Süßungsmittelzusammensetzung nach einem der Ansprüche 1 bis 8, wobei die Xylo-Oligosaccharide Xylose- und Arabinose-Monomere zusammen in einem Verhältnis von Xylose-Monomer zu Arabinose-Monomer von 20:1 bis 2:1 umfassen.

10. Die Süßungsmittelzusammensetzung nach einem der Ansprüche 1 bis 9, ferner umfassend eine Verbindung, ausgewählt aus einem Polysaccharid, einem Cellulose-Polysaccharid, Cellulose, einem Hemicellulose-Polysaccharid, Xylan, einem Polysaccharid-Derivat, einem Cellulose-Derivat, Carboxymethylcellulose, einem Polysaccharid-Aggregat, einem lignocellulosehaltigen Material oder einer Kombination davon.

11. Die Süßungsmittelzusammensetzung nach Anspruch 10, wobei die Süßungsmittelzusammensetzung die Polysaccharide umfasst, wobei die Süßungsmittelzusammensetzung höchstens 30 % der Polysaccharide, bezogen auf das Trockengewicht, umfasst.

12. Die Süßungsmittelzusammensetzung nach einem der Ansprüche 1 bis 11, ferner umfassend eine Verbindung, ausgewählt aus einer phenolischen Verbindung, einem Lignin, einem Teil eines Lignins, einem Ligninabbauprodukt, Ferulasäure, einem Ferulasäurederivat oder einer Kombination davon.

13. Die Süßungsmittelzusammensetzung nach einem der Ansprüche 1 bis 12, wobei die Oligosaccharidkomponente weniger als 0,5 ppm Al, As, B, Ba, Be, Ca, Cd, Co, Cr, Cu, Fe, Hg, K, Li, Mg, Mn, Mo, Na, Ni, P, Pb, S, Sb, Se, Si, Sn, Sr, Ti, Tl, V und/oder Zn umfasst.

## Revendications

1. Composition édulcorant comprenant
un composant oligosaccharide comprenant des xylo-oligosaccharides ayant un degré de polymérisation (DP) de deux à douze et des cello-oligosaccharides avec un DP de deux à six, lesdits xylo-oligosaccharides et lesdits cello-oligosaccharides étant présents à un rapport p/p des xylo-oligosaccharides aux cello-oligosaccharides de 19:1 à 1:1 ; et
un édulcorant de haute intensité,
le composant oligosaccharide et l'édulcorant de haute intensité étant présents à un rapport p/p du composant oligosaccharide à l'édulcorant de haute intensité de 5000:1 à 50:1.

2. Composition édulcorante selon la revendication 1, dans laquelle l'édulcorant de haute intensité comprend un édulcorant naturel de haute intensité, un édulcorant artificiel de haute intensité, ou une combinaison de ceux-ci.

3. Composition édulcorante selon la revendication 1 ou la revendication2, dans laquelle l'édulcorant de haute intensité comprend de l'acésulfame de potassium (Ace-K), de l'advantame, de l'aspartame, du néotame, de la saccharine, un extrait de fruit *Siraitia grosvenorii* (Swingle, Luo Han Guo, SGFE), un glycoside de stéviol, du sucralose, un cyclamate, de la glycyrrhizine, de la néohespéridine dihydrochalcone, de la thaumatine, ou toute combinaison de ceux-ci.

4. Composition édulcorante selon la revendication 1 ou la revendication 2, dans laquelle les cello-oligosaccharides et les xylo-oligosaccharides sont présents à un rapport p/p des xylo-oligosaccharides aux cello-oligosaccharides de 10:1 à 1:1 dans la composition édulcorante.

5. Composition édulcorante selon l'une quelconque des revendications 1 à 4, dans laquelle le niveau moyen de douceur par unité de poids de l'édulcorant de haute intensité est au moins 5 fois supérieur à un niveau moyen de douceur du composant oligosaccharide, tel que déterminé par la perception moyenne de la douceur d'un sujet humain.

6. Composition édulcorante selon l'une quelconque des revendications 1 à 5, dans laquelle la composition édulcorante comprend moins de 40 % en poids sec de monosaccharides.

7. Composition édulcorante selon l'une quelconque des revendications 1 à 6, dans laquelle la quantité de saccharose, de lactose, de maltose, de fructose, d'alcool de sucre (polyol), d'allulose, de tagatose, de maltodextrine, de maltodextrine résistante, d'érythritol, d'inuline ou de toute combinaison de ceux-ci est inférieure à la quantité des xylo-oligosaccharides ou à la quantité des cello-oligosaccharides.

8. Composition édulcorante selon l'une quelconque des revendications 1 à 7, dans laquelle la composition comprend moins de 20 % en poids sec de maltodextrine.

9. Composition édulcorante selon l'une quelconque des revendications 1 à 8, dans laquelle les xylo-oligosaccharides comprennent des monomères de xylose et d'arabinose conjointement à un rapport du monomère de xylose au monomère d'arabinose de 20:1 à 2:1.

10. Composition édulcorante selon l'une quelconque des revendications 1 à 9, comprenant en outre un composé choisi parmi un polysaccharide, un polysaccharide cellulosique, de la cellulose, un polysaccharide hémicellulosique, du xylane, un dérivé de polysaccharide, un dérivé de cellulose, de la carboxyméthylcellulose, un agrégat de polysaccharide, une matière lignocellulosique, ou toute combinaison de ceux-ci.

11. Composition édulcorante selon la revendication 10, dans laquelle la composition édulcorante comprend les polysaccharides, ladite composition édulcorante comprenant au plus 30 % desdits polysaccharides en poids sec.

12. Composition édulcorante selon l'une quelconque des revendications 1 à 11, comprenant en outre un composé choisi parmi un composé phénolique, une lignine, une fraction de lignine, un produit de dégradation de la lignine, l'acide férulique, un dérivé de l'acide férulique, ou toute combinaison de ceux-ci.

13. Composition édulcorante selon l'une quelconque des revendications 1 à 12, dans laquelle le composant oligosaccharide comprend moins de 0,5 ppm d'Al, As, B, Ba, Be, Ca, Cd, Co, Cr, Cu, Fe, Hg, K, Li, Mg, Mn, Mo, Na, Ni, P, Pb, S, Sb, Se, Si, Sn, Sr, Ti, Tl, V, et/ou Zn.
